(19)

(11) **EP 3 674 542 B1**

(12) **EUROPEAN PATENT SPECIFICATION**

(45) Date of publication and mention of the grant of the patent:
**31.01.2024 Bulletin 2024/05**

(21) Application number: **19216535.5**

(22) Date of filing: **16.12.2019**

(51) International Patent Classification (IPC):
***F02M 45/08*** *(2006.01)* ***F02M 61/18*** *(2006.01)*
***F02B 23/06*** *(2006.01)*

(52) Cooperative Patent Classification (CPC):
**F02B 23/0669; F02B 23/0672; F02B 23/0678; F02B 23/0693; F02M 61/182;** Y02T 10/12

(54) **COMPRESSION IGNITION ENGINE, AND VEHICLE**

KOMPRESSIONSZÜNDUNGSMOTOR UND FAHRZEUG

MOTEUR À ALLUMAGE PAR COMPRESSION ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2018 JP 2018240612**

(43) Date of publication of application:
**01.07.2020 Bulletin 2020/27**

(73) Proprietor: **Mazda Motor Corporation**
**Hiroshima 730-8670 (JP)**

(72) Inventors:
- **KIM, Sangkyu**
  **Aki-gun, Hiroshima 730-8670 (JP)**
- **SUMIMOTO, Takashi**
  **Aki-gun, Hiroshima 730-8670 (JP)**
- **OKADA, Shintaro**
  **Aki-gun, Hiroshima 730-8670 (JP)**
- **SHIMO, Daisuke**
  **Aki-gun, Hiroshima 730-8670 (JP)**
- **KANDA, Tomoyuki**
  **Aki-gun, Hiroshima 730-8670 (JP)**
- **TAGAMI, Shinichiro**
  **Aki-gun, Hiroshima 730-8670 (JP)**
- **HIRABAYASHI, Kazunori**
  **Aki-gun, Hiroshima 730-8670 (JP)**

(74) Representative: **Müller-Boré & Partner Patentanwälte PartG mbB**
**Friedenheimer Brücke 21**
**80639 München (DE)**

(56) References cited:
**EP-A1- 3 591 197** **FR-A1- 2 868 480**
**FR-A1- 2 887 586** **FR-A1- 2 902 462**
**US-A1- 2017 356 384**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 674 542 B1

## Description

The present invention relates to a compression ignition engine, and a vehicle. Particularly, present invention relates to a direct-injection type compression ignition engine in which a part of a combustion chamber is formed by a piston provided with a cavity.

The combustion chamber of an engine for a vehicle, such as an automotive vehicle, is formed by an inner wall surface of a cylinder, a bottom surface of a cylinder head (a ceiling surface of the combustion chamber) and a crown surface of the piston. In the direct-injection type compression ignition engine, fuel is supplied into the combustion chamber from a fuel injector provided at a central portion, in a radial direction, of the ceiling surface of the combustion chamber. An engine in which the cavity is provided at the crown surface of the piston and the fuel is injected from the fuel injector toward the cavity is known. Further, an engine in which the cavity has a two-stage structure in which an upper cavity and a lower cavity are provided and fuel is injected toward a lip which is located at a middle position between the both cavities is known (Japanese Patent Laid-Open Publication No. 2007-211644 (its counterpart US Patent Application Publication No. 2009/0025675 A1)). Moreover, a fuel injection device in which plural injection holes to actually inject fuel are arranged in upper-and-lower two rows in a cylinder-axis direction and these injection holes are opened/closed having time difference is known (Japanese Patent No. 5962795 (its counterpart US Patent Application Publication No. 2016/0237972 A1)).

An ideal manner of combustion in the combustion chamber is to perform the combustion so that air exiting in the combustion chamber is used up. In an engine where a part of the combustion chamber is formed by the crown surface of the piston provided with the above-described upper/lower two-stage structural cavity, it is important that the fuel is injected toward the lip such that a fuel spray is separately flowed into the upper cavity and the lower cavity.

Meanwhile, a fuel injection timing of the fuel injector may need to be advanced or retarded according to a driving condition and the like in order to secure the appropriate combustion. Herein, there may be a case where the fuel spray to be separately flowed into the upper-and-lower cavities is so affected by changing of the advanced or retarded fuel injection timing that flowing of the fuel spray deflects to one of the cavities. In this case, there is a concern that oxygen existing in this one of the cavities may not be utilized sufficiently, whereas the fuel existing in the other cavity may not be burned perfectly.

FR 2 902 462 A1 describes an engine which has a cylinder closed at an end by a cylinder head inside which a piston is mounted. Two cavities are arranged in a lateral wall.

FR 2 868 480 A1 describes that the engine has a fuel injector controlled by an engine control system for proceeding fuel injection based on distinct fuel slicks. A piston has a central cavity that cooperates with the slicks during passage of the piston near top dead center. The cavity is formed by upper and lower annular grooves that are separated by a transom. The grooves are arranged for receiving respective slicks.

An object of the present invention is, in a compression ignition engine, forming a part of the combustion chamber by the crown surface of the piston provided with the upper/lower two-stage structural cavity, and making the fuel spray be separately flowed into the both cavities properly regardless of changing (advancing/retarding) of the fuel injection timing.

This object is solved by the compression ignition engine according to the present invention of the independent claim. Preferred embodiments of the present invention are subject of the other dependent claims.

According to the present invention, the first injection-hole group having the injection holes directed toward the part close to the piston and the second injection-hole group having the injection holes directed toward the part close to the ceiling surface are provided as the plural injection holes of the fuel injector. The injection holes of these first-and-second injection-hole groups inject the fuel toward the lip concurrently. Thereby, an injection-hole angle (an angle which an injection-hole axis makes with the cylinder axis) of the fuel injector can be enlarged. Accordingly, even in a case where the fuel injection timing is advanced or retarded to a certain degree, the fuel splay is made to hit against the lip so that the fuel spay can be separately flowed into the first and second cavity sections properly. Accordingly, the flowing of the fuel spray is prevented from deflecting to either one of the cavity sections, so that the oxygen exiting in the combustion chamber can be utilized effectively and also appropriate burning of the fuel can be attained, suppressing generation of any improper soot. Herein, while the injection-hole angle may be enlarged by increasing an outlet size of each injection hole, this is not preferable because it is required to make the fuel injector excessively large for securing sufficient penetration.

In an embodiment of the present invention, respective outlets of the plural first injection holes are provided in the ring shape at the same level in the cylinder-axis direction, and respective outlets of the plural second injection holes are provided in the ring shape at the same level in the cylinder-axis direction, the level at which the respective outlets of the plural second injection holes are provided being offset, in the cylinder-axis direction, from the level at which the respective outlets of the plural first injection holes are provided.

According to this embodiment, the respective injection-hole outlets of the first-and-second injection holes can be arranged so as to secure a proper distance, in a peripheral direction, between the adj acent outlets by the above-described offset arrangement. Accordingly, a size of an arrangement part of the injection holes at the fuel injector can be made properly small compared to a case where the injection holes are arranged in a line (non-offset), thereby suppressing the fuel injector from being improperly large. Herein, if the injection holes are arranged in a line in a state where the outlet size of the injection holes is maintained, the distance between the adjacent injection-hole outlets in the peripheral direction become so small that the respective fuel sprays injected from the adjacent outlets interfere with each other, so that there may occur a problem that a partially-rich air-fuel mixture is improperly generated.

In another embodiment of the present invention, the respective outlets of the plural first injection holes are provided in the ring shape at regular intervals, the respective outlets of the plural second injection holes are provided in the ring shape at regular intervals, and the outlets of the plural injection holes of the first-and-second injection-hole groups are arranged such that each outlet of the plural injection holes of one of the first-and-second injection-hole groups is located at a middle position between adjacent outlets of the plural injection holes of the other group.

According to this embodiment, it can be suppressed that the respective fuel sprays injected from the adjacent injection-hole outlets interfere each other in each of the first-and-second injection-hole groups. Further, interference of the fuel sprays injected from the outlet of the injection hole of the first injection-hole group and the outlet of the injection hole of the second injection-hole group can be suppressed as well.

In another embodiment of the present invention, the fuel injector comprises a sack portion where the fuel is filled and a sack wall which partitions the sack portion which are provided at a tip portion thereof exposed to the combustion chamber, and the first injection holes of the first injection group and the second injection holes of the second injection group are respectively formed at the sack wall and have the same injection-hole diameter.

According to this embodiment, the fuel filled in the sack portion is injected from the injection holes of the first-and-second injection-hole groups. Herein, since the injection-hole diameter of the injection holes of the first injection-hole group is equal to the injection-hole diameter of the injection holes of the second injection-hole group, it can be prevented that each fuel injection from the respective groups is improperly biased.

Other features, aspects, and advantages of the present invention will become apparent from the following description which refers to the accompanying drawings.

FIG. 1 is a schematic sectional diagram, in a cylinder-axis direction, of a diesel engine according to an embodiment of a compression ignition engine of the present invention.

FIG. 2A is a perspective view of a crown portion of a piston of the diesel engine shown in FIG. 1, and FIG. 2B is a perspective sectional view of the piston.

FIG. 3 is an enlarged view of a cross section of the piston shown in FIG. 2B.

FIG. 4 is a diagram for explaining respective curved-surface shapes of first-and-second cavity sections and a lip.

FIG. 5A is a schematic sectional view of a tip portion of an injector (fuel injector) according to the embodiment, and FIG. 5B is a plan view of the tip portion, when viewed in the cylinder-axis direction.

FIGS. 6A, 6B are schematic diagrams showing a state of a fuel spray from the injector, FIG. 6A being its diagram when viewed in the cylinder-axis direction, FIG. 6B being its diagram when viewed in a direction perpendicular to the cylinder-axis direction.

FIG. 7 is a sectional view of the piston which explains a relationship between a crown surface of the piston and an injection-hole axis of fuel injected from the injector.

FIG. 8 is a top view of the piston, which shows a distribution pattern of a fuel spray to the first-and-second cavity sections.

FIG. 9 is a time chart showing a fuel-injection timing and a heat generation rate.

FIG. **10** is a diagram schematically showing a generation state of an air-fuel mixture in a combustion chamber in a main injection.

FIGS. **11A, 11B** are diagrams showing injection states of the fuel injected toward the lip, FIG. **11A** showing a case of a comparative example in which injection-hole axes of upper-and-lower two-stage injection-hole groups are parallel, FIG. **11B** showing a case of the present embodiment.

FIGS. **12A, 12B** are diagrams showing distribution states of the fuel spay, FIG. **12A** showing a case of the comparative example, FIG. **12B** showing a case of the present embodiment.

FIGS. **13 A - 13E** are diagrams showing various arrangement patterns of the injection holes in a case where the first injection-hole group and the second injection-hole group are provided to be vertically offset from each other.

FIGS. **14 A - 14C** are diagrams showing examples of the injection-hole arrangement in a case where the first injection-hole group and the second injection-hole group are arranged in a line.

[Whole Structure of Engine]

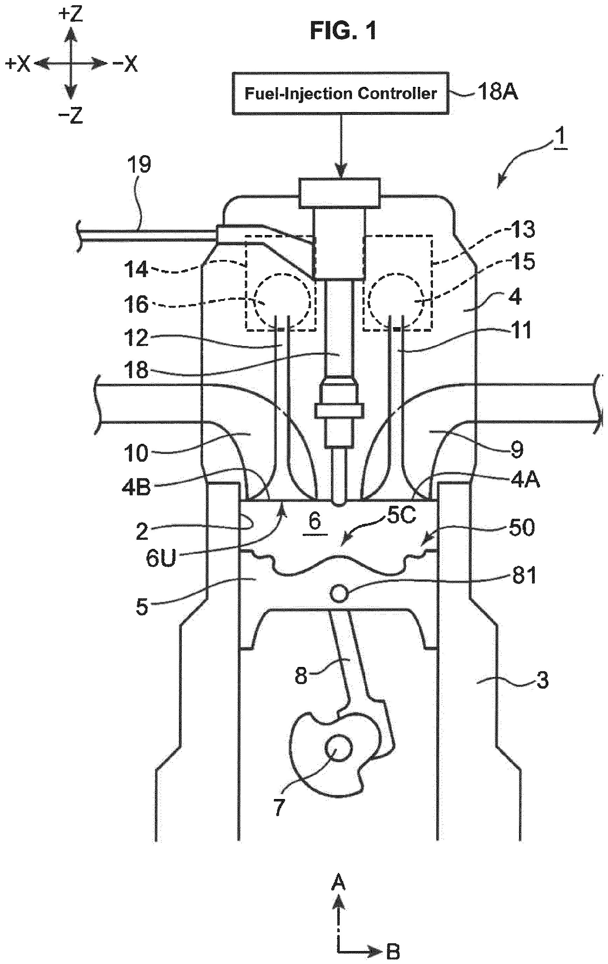

Hereafter, a compression ignition engine according to an embodiment of the present invention will be described referring to the drawings. FIG. 1 is a schematic sectional diagram showing a direct-injection type diesel engine according to the embodiment of the compression ignition engine of the present invention. The diesel engine of the present embodiment includes a cylinder and a piston, which is a multi-cylinder engine which is installed to/mounted on a vehicle as a power source for driving the vehicle, such as an automotive vehicle. The engine includes an engine body **1** and auxiliary elements assembled thereto, such as intake/exhaust manifolds and various pumps, not illustrated.

The engine body **1** comprises a cylinder block **3,** a cylinder head **4,** and a piston **5.** The cylinder block **3** comprises plural cylinders and cylinder liners (hereafter, referred to as a "cylinder **2"** simply, only one of these is illustrated in the figure) which are aligned in a direction perpendicular to a page of FIG. **1.** The cylinder head **4 is** attached to an upper surface of the cylinder block **3** so as to cover an upper opening of the cylinder **2.** The piston **5** is accommodated in the cylinder **2** so as to slide reciprocatively, which is coupled to a crankshaft **7** via a connecting rod **8.** The crankshaft **7** is rotated around its central axis according to a reciprocating motion of the piston **5.** The structure of the piston **5** will be described specifically later.

A combustion chamber **6** is formed at an upper part of the piston **5.** At the cylinder head **4** are formed an intake port **9** and an exhaust port **10** which respectively connect to the combustion chamber **6.** A bottom surface of the cylinder head **4** is a combustion-chamber ceiling surface **6U,** which is configured to have a flat shape extending in a horizontal direction. An intake-side opening portion **4A** which is a downstream end of the intake port **9** and an exhaust-side opening portion **4B** which is an upstream end of the exhaust port **10** are formed at the combustion-chamber ceiling surface **6U.** An intake valve **1A** to open/close the intake-side opening portion **4A** and an exhaust valve **12** to open/close the exhaust-side opening portion **4B** are assembled to the cylinder head **4.**

The intake valve **11** and the exhaust valve **12** are particularly a so-called poppet type. The intake valve **11** comprises an umbellar-shaped valve body to open/close the intake-side opening portion **4A** and a stem which is particularly provided to extend vertically from the valve body. Likewise, the exhaust valve **12** comprises an umbellar-shaped valve body to open/close the exhaust-side opening portion **4B** and a stem which particularly is provided to extend vertically from the valve body. Each of the valve bodies of the intake valve **11** and the exhaust valve **12** has a valve surface which is exposed to the combustion chamber **6.**

In the present embodiment, a combustion-chamber wall surface which partitions the combustion chamber **6** comprises an inner wall surface of the cylinder **2,** a crown surface **50** as an upper surface (+ Z-side surface) of the piston **5,** the combustion-chamber ceiling surface **6U** (ceiling surface) which is a bottom surface of the cylinder head **4, and** the respective valve surfaces of the intake valve **11** and the exhaust valve **12.**

The cylinder head **4** is particularly provided with an intake-side valve train (valve driving mechanism) **13** and an exhaust-side valve train (valve driving mechanism) **14** which drive the intake valve **11** and the exhaust valve **12,** respectively. The intake valve **11** and the exhaust valve **12** are driven by these valve trains **13, 14** so as to be liked with a rotation of the crankshaft **7.** According to the driving of the intake valve **11** and the exhaust valve **12,** the valve body of the intake valve **11** opens/closes the intake-side opening portion **4A** and the valve body of the exhaust valve **12** opens/closes the exhaust-side opening portion **4B.**

An intake-side variable valve timing mechanism (intake-side VVT) **15** is installed to the intake-side valve train **13.** The intake-side VVT **15 is** particularly an electric-type VVT which is provided at an intake camshaft, which is configured to change an opening/closing timing of the intake valve **11** by continuously changing a rotational phase of the intake camshaft to the crankshaft **7** within a specified angle range. Likewise, an exhaust-side variable valve timing mechanism (exhaust-side WT) **16** is installed to the exhaust-side valve train **14.** Particularly, the exhaust-side VVT **16** is also an electric-type VVT which is provided at an exhaust camshaft, which is configured to change an opening/closing timing of the exhaust valve **12** by continuously changing a rotational phase of the exhaust camshaft to the crankshaft **7** within a specified angle range.

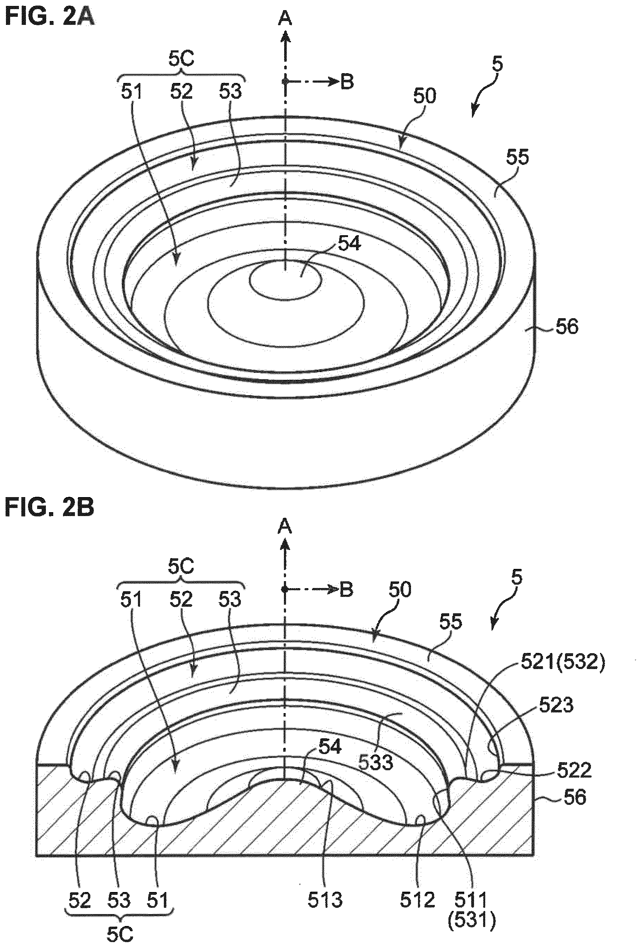

An injector **18** (fuel injector) to inject fuel into the combustion chamber **6** from its tip portion is attached to the cylinder head **4** (the combustion-chamber ceiling surface **6U**) for each of the cylinders **2.** A fuel supply pipe **19** is coupled to the injector **18.** The injector **18** injects the fuel supplied through the fuel supply pipe **19** into the combustion chamber **6** directly. In the present embodiment, the injector **18** is assembled to the cylinder head **4** at a central portion, in a radial direction, of the combustion chamber **6** so as to extend in a cylinder-axis direction A, and injects the fuel toward a cavity **5C** (FIGS. **2A, 2B - 4)** which is formed at a crown surface **50** of the piston **5,** which is will be described specifically. A specific structure of the injector **18** will be described later.

A high-pressure fuel pump (not illustrated) which includes a plunger type pump linked with the crankshaft **7** and others is particularly coupled to an upstream side of the fuel supply pipe **19.** A common rail for pressure accumulation (not illustrated) which is particularly common to all of the cylinders **2** is provided between the high-pressure fuel pump and the fuel supply pipe **19.** The pressured fuel accumulated in this common rail is supplied to the injector **18** provided at each cylinder **2,** so that the high-pressure fuel is injected into the combustion chamber **6** from each injector **18.**

[Specific Structure of Piston]

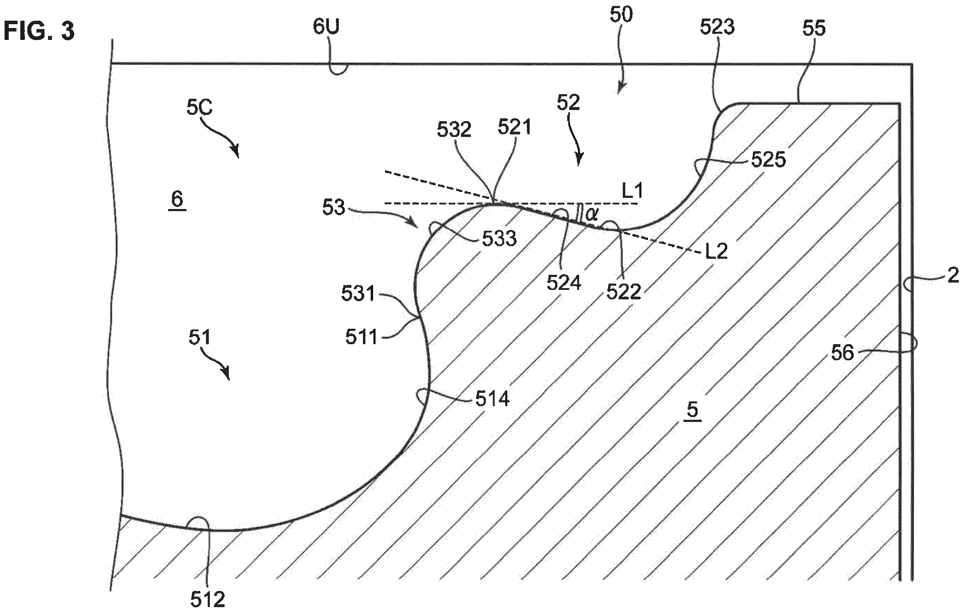

Subsequently, an example structure of the piston **5,** in particular the crown surface **50,** will be described specifically. FIG. **2A** is a perspective view showing an upper part of the piston **5** primarily. The piston **5** comprises a piston head positioned at its upper side and a skirt portion positioned at its lower side, and FIG. **2A** shows a portion of the piston head which has the crown surface **50** at its top. FIG. **2B** is a perspective sectional view of the piston **5** along a radial direction. FIG. **3** is an enlarged view of the radial-direction cross section shown in FIG. **2B.** In FIGS. **2A** and **2B,** the cylinder-axis direction A and a combustion-chamber radial direction B are shown by arrows.

The piston **5** particularly includes the cavity **5C,** a squish area **55,** and a side peripheral surface **56.** As described above, a part (bottom surface) of the combustion-chamber wall surface which partitions the combustion chamber **6** is formed by the crown surface **50** of the piston **5,** and the cavity **5C** is provided at the crown surface **50.** The cavity **5C** is a portion which is formed by configuring the crown surface **50** to be recessed downwardly in the cylinder-axis direction A, which receives the fuel injected from the injector **18.** The squish area **55** is particularly a ring-shaped flat surface portion which is positioned at an area near an outer peripheral edge, in the radial direction B, of the crown surface **50.** The cavity **5C** is provided at a central area, in the radial direction B, of the crown surface **50,** excluding the squish area **55.** The side peripheral surface **56** is a surface which slides the inner wall surface of the cylinder **2,** which is provided with plural ring grooves where piston rings, not illustrated, are inserted.

The cavity **5C** particularly includes a first cavity section **51,** a second cavity section **52,** a lip **53,** and a mountain section **54.** The first cavity section **51** is particularly a recess portion which is provided at the central area, in the radial direction B, of the crown surface **50.** The second cavity section **52 is** particularly a ring-shaped recess portion which is provided outside the first cavity section **51** at the crown surface **50.** The lip **53** is a portion which connects the first cavity section **51** and the second cavity section **52** in the radial direction B. The mountain section **54** is particularly a mountain-shaped protrusion portion which is provided at a central position, in the radial direction B, of the crown surface **50** (the first cavity section **51).** The mountain section **54** is configured to protrude upwardly at a position located right below a nozzle **181** of the injector **18.**

The first cavity section **51** particularly includes a first upper-end portion **511,** a first bottom portion **512,** and a first inner-end portion **513.** The first upper-end portion **511** is particularly located at the highest level at the first cavity section **51** and continuous to the lip **53.** The first bottom portion **512** is particularly a ring-shaped area, in a top view, which is configured to be recessed downwardly the most in the first cavity section **51.** This first bottom portion **512** is the deepest area of the cavity **5C,** and the first cavity section **51** has a specified depth (first depth) in the cylinder-axis direction A at the first bottom portion **512.** The first bottom portion **512** is positioned near inside the lip **53** in the radial direction B.

A radial-direction concaved portion **514** which is particularly curved outwardly in the radial direction B is provided to connect the first upper-end portion **511** and the first bottom portion **512.** This radial-direction concaved portion **514** particularly includes a section which is concaved outwardly, in the radial direction B, from the lip **53.** The first inner-end portion **513** is located at the innermost position, in the radial direction, of the first cavity section **51,** and continuous to a lower end of the mountain section **54.** The first inner-end portion **513** and the first bottom portion **512** are connected by a gently-curved skirt-shaped surface.

The second cavity section **52** particularly includes a second inner-end portion **521,** a second bottom portion **522,** a second upper-end portion **523,** a taper area **524,** and a rising wall area **525.** The second inner-end portion **521** is particularly located at the innermost position, in the radial direction B, of the second cavity section **52** and continuous to the lip **53.** The second bottom portion **522** is an area which is configured to be recessed downwardly the most in the second cavity section **52.** The second cavity section **52** particularly has a shallower depth (second depth), in the cylinder-axis direction A, than the first bottom portion **512** at the second bottom portion **522.** That is, the second cavity section **52** is a recess portion which is located at a higher level than the first cavity section **51** in the cylinder-axis direction A. The second upper-end portion **523** is particularly located at the highest level and the outermost position, in the radial direction B, of the second cavity section **52** and continuous to the squish area **55.**

The taper area **524** is particularly a portion which extends from the second inner-end portion **521** toward the second bottom portion **522** so as to have a surface which slants outwardly and downwardly. As shown in FIG. **3,** the taper area **524** is particularly inclined along an inclination line L2 which crosses a horizontal line L1 extending in the radial direction B by an inclination angle $\alpha$. The rising wall area **525** is particularly a wall surface which is configured to rise relatively steeply on the outward side, in the radial direction B, of the second bottom portion **522.** A curved surface, in a sectional view along the radial direction B, is formed between the second bottom portion **522** and the second upper-end portion **523** such that an extensional direction of the wall surface of the second cavity section **52** changes from the horizontal direction to the upward direction. Apart of this curved surface which is located near the second upper-end portion **523** and configured to be nearly vertical is the rising wall area **525.**

The lip **53** is particularly configured to protrude inwardly in the radial direction B at a position between the lower-side first cavity section **51** and the upper-side second cavity section **52** in the sectional view along the radial direction **B.** The lip **53** comprises a lower end portion **531,** a third upper-end portion **532** (an upper end portion in the cylinder-axis direction), and a central portion **533** which is located at a central position between these portions **531, 532.** The lower end portion **531** is a connected section to the first upper-end portion **511** of the first cavity section **51.** The third upper-end portion **532** is a connected section to the second inner-end portion **521** of the second cavity section **52.**

In the cylinder-axis direction A, the lower end portion **531** is the lowermost portion and the third upper-end portion **532** is the uppermost portion. The above-described taper area **524** is also an area extending from the third upper-end portion **532** to the second bottom portion **522.** The second bottom portion **522** is located at a lower level than the third upper-end portion **532.** That is, the second cavity section **52** of the present embodiment does not have any bottom surface extending horizontally outwardly, in the radial direction B, from the third upper-end portion **532,** in other words, there is no horizontal surface extending from the third upper-end portion **532** to the squish area **55,** but the second cavity section **52** has the second bottom portion **522** recessed downwardly from the third upper-end portion **532.**

The mountain section **54** which protrudes upwardly has its height equal to the height of the third upper-end portion **532** of the lip **53,** and the mountain section **54** is located at the level lower than the squish area **55.** The mountain section **54** is positioned at a center of the first cavity section **51** having a circular shape in the top view, so that the first cavity section **51** is configured to be a ring-shaped groove part surrounding the mountain section **54.**

[Curved-Surface Shapes of Cavity Sections]

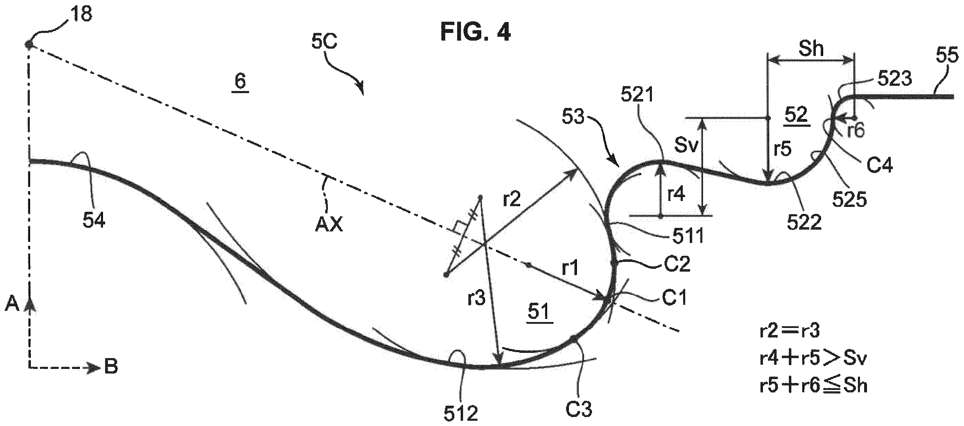

FIG. **4** is a sectional view along the cylinder-axis direction A for explaining respective curved-surface shapes of the first-and-second cavity sections **51, 52** and the lip **53.** The first cavity section **51** particularly has a surface shape corresponding to a curved shape of a Cartesian oval (hereafter, referred to as an "egg shape") in the cross section including the cylinder axis. Specifically, the first cavity section **51** particularly includes a first part **C1** farthest from the injection holes of the injector and has an arc shape, a second part **C2** which is located between the first part **C1** and the lip **53,** and a third part **C3** which extends inwardly, in the radial direction B, from the first part **C1.** Referring to FIG. **3** as well, the first part **C1** corresponds to a central area of the radial-direction concaved portion **514,** the second part **C2** corresponds to an area extending from the radial-direction concaved portion **514** to the first upper-end portion **511,** and the third part **C3** corresponds to the an area extending from the radial-direction concaved portion **514** to the first bottom portion **512.**

FIG. **4** shows a state where an injection-hole axis AX of the fuel injected from the injector **18** crosses the first part **C1** farthest from the injector **18.** The "egg shape" of the first cavity section **51** is an arc shape in which a radius r1 of the first part **C1** is the smallest, and a radius of a curved part extending from the first part **C1** to the second part **C2** and a radius of a curved part extending from the first part **C1** to the third part **C3** respectively become gradually larger.

That is, a radius r2 of the second part **C2** becomes larger as it goes away from the first part **C1** in a counterclockwise direction in the cross section of FIG. **4.** Further, a radius r3 of the third part **C3** becomes larger at the same rate as the radius r2 of the second part **C2** as it goes away from the first part **C1 in** a clockwise direction (r2 = r3). The "egg shape" having its starting point at the lip **53** has an arch shape in which a radius of an arc part extending from the second part **C2** to the first part **C1** becomes smaller and a radius of an arc part extending from the first part **C1** to the third part **C3** becomes larger.

The lip **53** particularly has a convex-shaped curved surface with a specified radius r4 which extends from the lower-end portion **531** (the first upper-end portion **511)** to the third upper-end portion **532** (the second inner-end portion **521).** The second cavity section **52** particularly has a recess-shaped curved surface with a specified radius r5 which extends from the second bottom portion **522** to the rising wall area **525.** The second upper-end portion **523** has a convex-shaped curved surface with a radius r6. When a distance, in the cylinder-axis direction A, between a central point of the radius r4 and a central point of the radius r5 is defined as a first distance Sv and a distance, in the radial direction B, between a central point of the radius r5 and a central point of the radius r6 is defined as a first distance Sh, respective numerical values of the radiuses r4, r5, and r6 are selected so as to meet the following expressions.

$$r4 + r5 > Sv$$

$$r5 + r6 \leqq Sh$$

In the second cavity section **52,** a part extending from the second bottom portion **522** to an upper-end part **C4** of the rising wall area **525** is formed by a nearly 1/4 circle having the radius r5. The upper-end part **C4** of the rising wall area **525** is continuous to a lower-end position of the second upper-end portion **523** which is formed by a nearly 1/4 circle having the radius r6. Herein, an upper end of the second upper-end portion **523** is continuous to the squish area **55.**

According to the above-described curved-surface shape, a lower part of the rising wall area **525** is positioned on the inward side, in the radial direction B, of the upper-end part **C4** of the rising wall area **525.** That is, the rising wall area **525** does not have any portion which is concaved outwardly in the radial direction B like the radial-direction concaved portion **514** of the first cavity section **51.** The reason why the rising wall area **525** has the above-described arc shape is that the rising wall area **525** works with the above-described "egg shape" of the first cavity section **51** so that the air-fuel mixture can be prevented from excessively returning inwardly in the radial direction B in the combustion chamber 6 and a space (a squish space) above the squish area **55** positioned on the outward side, in the radial direction B, of the rising wall area **525** can be effectively utilized for appropriate combustion of the air-fuel mixture, which will be described later more specifically.

[Specific Structure of Injector]

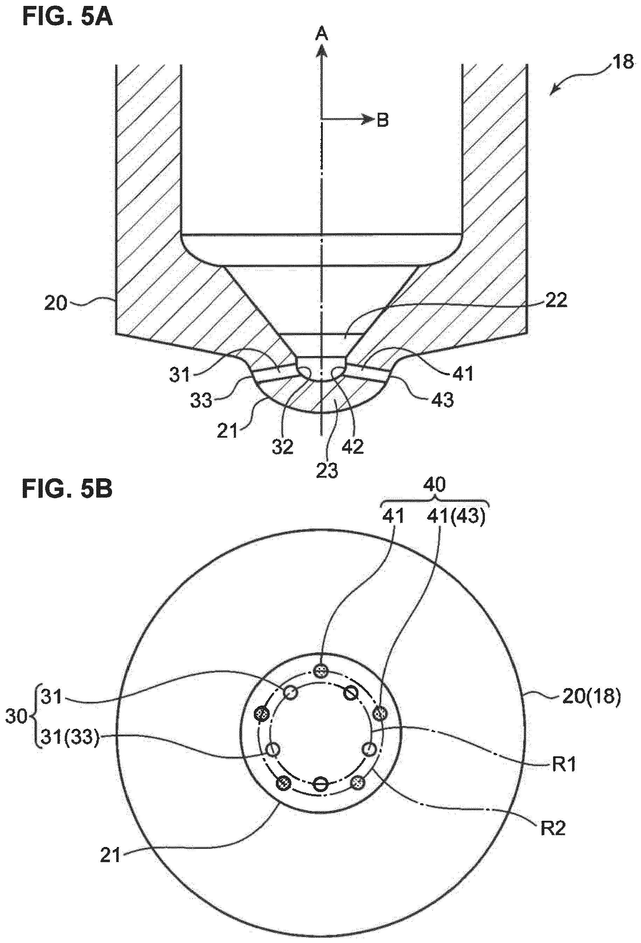

Subsequently, an example of the structure of the injector **18** will be described. FIG. **5A** is a schematic sectional view of a tip portion **20** of the injector **18,** and FIG. **5B** is a plan view of the tip portion **20,** when viewed from a downward side in the cylinder-axis direction A. The injector **18 has** the tip portion **20** which is provided to protrude into the combustion chamber **6** from the combustion-chamber ceiling surface **6U** for directly injecting the fuel into the combustion chamber **6.** A nozzle head **21** which is provided with plural injection holes to inject the fuel into the combustion chamber **6 is** disposed at a lower end of the tip portion **20.** The nozzle head **21** is configured to protrude in a hemispherical shape from the lower end of the tip portion **20.** A sack portion **22** which is a space where the fuel to be injected is filled is provided inside the tip portion **20.** The sack portion **22** is a corn-shaped space and partitioned by a sack wall **23.**

The present embodiment is particularly characterized in that a first injection-hole group **30** and a second injection-hole group **40** are provided as the plural injection holes formed at the nozzle head **21,** wherein respective fuel-injection directions of these groups **30, 40** are different from each other. The first injection-hole group **30** includes plural first injection holes **31** which are arranged circumferentially (or in a ring shape) along a first ring-shaped line R1. FIG. **5B** shows an example in which particularly five first injection holes **31** are arranged cirmferentially (or in the ring shape) along the first ring-shaped line R1 particularly at regular intervals. Each of the first injection holes **31** is provided to penetrate the sack wall **23** and connect the sack portion **22** and the outside (the combustion chamber **6),** which comprises an injection-hole inlet **32** which is opened to the sack portion **22** and an injection-hole outlet **33** which is opened to an outer surface of the nozzle head **21.**

The second injection-hole group **40** includes plural first injection holes **41** which are arranged circumferentially (or in the ring shape) along a second ring-shaped line R2 which is positioned outside the first ring-shaped line R1. Herein, in illustration of FIG. **5B,** the distance between the ring-shaped lines R1, R2 is enlarged just for easy understanding. This figure shows an example in which particularly five second injection holes **41** are arranged circumferentially (or in the ring shape) along the second ring-shaped line R2 particularly at regular intervals. Each of the second injection holes **41** is also provided to penetrate the sack wall **23** and connect the sack portion **22** and the outside (the combustion chamber **6),** which comprises an injection-hole inlet **42** which is opened to the sack portion **22** and an injection-hole outlet **43** which is opened to the outer surface of the nozzle head **21.**

The first-and-second ring-shaped lines R1, R2 are substantially perpendicular to the cylinder-axis direction A. The second ring-shaped line R2 is located at a higher level than the first ring-shaped line R1 at the hemispherical-shaped nozzle head **21** protruding downwardly, so that the second ring-shaped line R2 is positioned on the outward side, in the radial direction, of the first ring-shaped line R1 in FIG. **5B** which is the plan view, when viewed from below. Thus, the five first injection holes **31** (the injection-hole outlets **33)** arranged along the first ring-shaped line R1 are arranged in the ring shape at the same level in the cylinder-axis direction A. Further, the five second injection holes **41** (the injection-hole outlets **43)** arranged along the second ring-shaped line R2 are arranged in the ring shape at the same level in the cylinder-axis direction A, which is offset upwardly from the level of the first injection holes **31.**

The first injection holes **31** of the first injection-hole group **30** and the second injection holes **41** of the second injection-hole group **40** are respectively formed at the sack wall **23** such that those are directed in relatively different directions. The first injection holes **31** are particularly directed relatively toward a part close (or closer) to the piston **5** (particularly the first bottom portion **512)** in the cylinder-axis direction A. Meanwhile, the second injection holes **41** are particularly directed relatively toward a part close (or closer) to the combustion-chamber ceiling surface **6U** (particularly the upper end portion 532 of the lip 53) in the cylinder-axis direction A. In other words, the second injection holes **41** are particularly directed toward a part closer to the combustion-chamber ceiling surface **6U** in the cylinder-axis direction A than a part to which the first injection holes **31** are directed. Herein, a difference and an offset quantity in a directional angle (injection-hole angle) between these holes **31, 41** are considerably small, and the first injection-hole group **30** and the second injection-hole group **40** are configured to (or positioned so as to) inject the fuel toward the lip **53** of the cavity **5C** concurrently. That is, the first injection holes **31** and the second injection holes **41** are positioned such that respective fuel sprays from both of these injection holes **31, 41** hit against the lip **53** when the fuel injection is executed by the injector **18** at a certain crank angle.

As described above, the five first injection holes **31** and the five second injection holes **41** are respectively arranged in the ring shape at regular intervals. Further, in the present embodiment, the first injection holes **31** and the second injection holes **41** are provided at the nozzle head **21** such that each outlet of the second injection holes **41** (the injection-hole outlet **43)** is located at a middle position, in a peripheral direction, between adjacent two outlets of the first injection holes **31** (the injection-hole outlets **31).** Consequently, while the arrangement lines R1, R2 of the first injection holes **31** and the second injection holes **41** are different, the first injection holes **31** and the second injection holes **41** (the injection-hole outlets **33** and the injection-hole outlets **43)** are alternately arranged at the nozzle head **21** substantially at regular pitches in the peripheral direction. By this regular-pitch injection-hole arrangement and the above-described offset injection-hole arrangement in the cylinder-axis direction A, improper interference of the fuel spray from the first injection holes **31** with the fuel spray from the second injection holes **41** can be suppressed.

An injection-hole diameter of the first injection hole **31** and an injection-hole diameter of the second injection hole **41** are particularly set at the substantially same size. That is, the first injection hole **31** is a cylindrical hole having the same inner diameter over a range from the injection-hole inlet **32** to the injection-hole outlet **33.** Likewise, the second injection hole **41** is a cylindrical hole having the same inner diameter over a range from the injection-hole inlet **42** to the injection-hole outlet **43.** These first-and-second injection holes **31, 41** have the same inner diameter. These injection-hole outlets **32, 42** connect to the common sack portion **22.** Accordingly, while the fuel filled in the sack portion **22** is injected through the both injection-hole outlets **33, 43,** since the both injection holes **31, 41** have the same injection-hole diameter, it is prevented that the fuel injection from the first-and-second injection-hole groups **30, 40** is improperly biased.

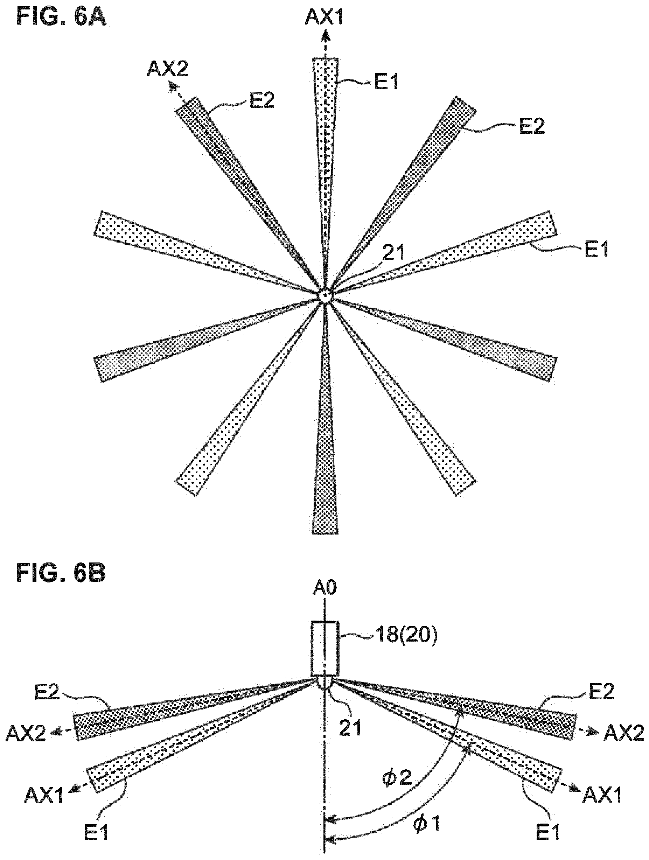

FIGS. **6A, 6B** are schematic diagrams showing a state of the fuel spray from the injector **18,** FIG. **6A** being its diagram when viewed in the cylinder-axis direction A, FIG. **6B** being its diagram when viewed in a direction perpendicular to the cylinder-axis direction A. In FIGS. **6A** and **6B,** a first fuel spray **E1** which is injected from the first injection hole **31** of the first injection-hole group **30** and a second fuel spray **E2** which is injected from the second injection hole **41** of the second injection-hole group **40** are shown. Further, injection-hole axes AX1, AX2 for the first-and-second fuel sprays **E1, E2** are shown. The first-and-second fuel sprays **E1, E2** spread in a corn shape with a specified spray angle around the respective injection-hole axes AX1, AX2. The first-and-second fuel sprays **E1, E2** mix with air (oxygen) exiting in the combustion chamber **6** and becomes the air-fuel mixture after being injected from the injection holes **31, 41.**

As described above, the first injection holes **31** and the second injection holes **41** are alternately arranged particularly at regular pitches in the peripheral direction. Accordingly, in FIG. **6A,** the first fuel spray **E1** and the second fuel spray **E2** are aligned radially in the peripheral direction at regular intervals.

Meanwhile, in FIG. **6B,** there occurs a difference of the fuel-injection direction which is caused by the difference of the directive direction between the first injection hole **31** and the second injection hole **41.** In a relationship of the injection-hole axis AX1 of the first injection hole **31** and the injection-hole axis AX2 of the second injection hole **41,** the injection-hole axis AX1 is directed relatively toward the part close to the piston **5,** and the injection-hole axis AX2 is directed relatively toward the part close to the combustion-chamber ceiling surface **6U.** In a case where the injector **18** is arranged along a cylinder axis A0, a first corn angle $\varphi 1$ which is defined as an angle which the injection-hole axis AX1 makes with the cylinder axis A0 and a second corn angle $\varphi 2$ which is defined as an angle which the injection-hole axis AX2 makes with the cylinder axis A0 have a relationship of $\varphi 1 < \varphi 2$.

The first corn angle $\varphi 1$ and the second corn angle $\varphi 2$ are set by considering a positional relationship to the lip **53,** the fuel-injection timing, the compression ratio, and others. For example, in a case where the fuel injection toward the lip **53** is conducted in an injection before a compression top dead center TDC (in a pre-injection P1, which will be described later), it is possibly set that the first corn angle $\varphi 1$ = about 76.0°, the second corn angle $\varphi 2$ = about 78.5°, and $\varphi 2 - \varphi 1$ = about 2.5°. The angle of $\varphi 2 - \varphi 1$ is possibly set according to the size of the cylinder-axis direction A and the position, in the radial direction B, of the lip **53** and the like, but that is possibly selected from a range of cp2 - $\varphi 1$ = about 1°-about 4°.

Herein, the "egg shape" of the cavity section shown in FIG. **4** is defined based on the single injection-hole axis AX. In the present embodiment, there exist the two injection-hole axes AX1, AX2 having the different corn angles. Regarding the above-described "egg shape", any one of the injection-hole axes AX1, AX2 may be set as "AX" in FIG. **4,** or an imaginary injection-hole axis having a middle corn angle of these axes AX1, AX2 may be set as "AX" in FIG. **4.**

[Spatial Distribution of Fuel Spray]

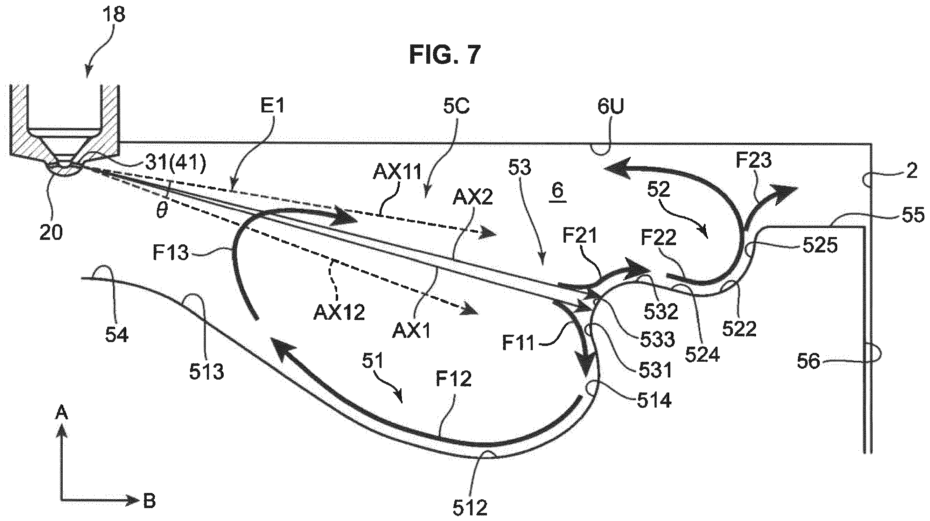

Next, a state of the fuel injection to the cavity **5C** conducted by the injector **18** and a flow of the air-fuel mixture after the fuel injection will be described referring to FIG. 7. FIG. **7** is a sectional view of the combustion chamber **6,** which schematically shows relationships between the crown surface **50** (the cavity **5C)** and the injection-hole axes AX1, AX2 of the first-and-second fuel injection sprays **E1, E2** injected from the injector **18** and arrows F11, F12, F13, F22 and F23 which schematically represent the flow of the air-fuel mixture after the fuel injection.

FIG. 7 shows the state where the fuel is injected from the single first injection hole **31** among the plural injection holes provided at the injector **18** which belongs to the first injection-hole group **30.** The fuel injected from the first injection hole **31** is sprayed along the injection-hole axis AX1 shown in this figure. The sprayed fuel spreads with a spray angle $\Theta$. In FIG. **7,** an upper spreading axis AX11 which represents upward spreading relative to the injection-hole axis AX1 and a lower spreading axis AX12 which represents downward spreading relative to the injection-hole axis AX1 are shown. The spray angle $\theta$ is an angle which the upper spreading axis AX11 makes with the lower spreading axis AX12. That is, the first fuel spray E1 injected from the first injection hole **31** along the injection-hole angle AX1 goes toward the lip **53,** spreading in the corn shape with the spray angle $\theta$. The second fuel spray **E2** injected from the second injection hole **41** along the injection-hole angle AX2 also goes toward the lip **53,** spreading in the corn shape with the spray angle θ, which is not illustrated in FIG. **7.**

Both of the injection-hole axis AX1 and the injection-hole axis AX2 are possibly directed toward the lip **53** of the cavity **5C** concurrently. That is, the first injection hole **31** and the second injection hole **41** can inject the fuel toward the lip **53** at the same injection timing. Thus, by making the injector **18** execute the fuel injection at the certain crank angle of the piston **5,** the fuel spray can be injected toward the lip **53** from both of the first injection hole **31** and the second injection hole **41** with the above-described corn angle difference φ2 - φ1. In FIG. **7,** the positional relationship at the above-described specified crank angle between the cavity **5C** and the injection-hole axes AX1, AX2 is shown. The fuel injected from the first injection hole **31** and the second injection hole **41** (the first fuel spray **E1** and the second fuel spray **E2)** forms the air-fuel mixture together with the air existing in the combustion chamber **6** and hits against the lip **53.**

As shown in FIG. **7,** the first fuel spray **E1** and the second fuel spray **E2** which are injected toward the lip **53** along the injection-hole axes AX1, AX2 hit against the lip **53,** then are spatially divided into the one (the arrow F11) directed toward the first cavity section **51** (downwardly) and the other one (the arrow F21) directed toward the second cavity section **52** (upwardly). That is, the fuel injected toward the central portion **533** of the lip **53** is divided vertically, and then these vertically-divided fuel come to flow along the respective surfaces of the cavity sections **51, 52,** forming the air-fuel mixture together with the air existing in the cavity sections **51, 52.**

Specifically, the air-fuel mixture flowing in the direction of the arrow F11 (downwardly) goes down into the radial-direction concaved portion **514** of the first cavity section **51** from the lower end portion **531** of the lip **53** and flows in the downward direction. Then, this air-fuel mixture changes its flowing direction from the vertical direction to the inward direction in the radial direction B because of the curved-surface shape of the radial-direction concaved portion **514,** and then flows along the bottom surface of the first cavity section **51** having the first bottom portion **512** as shown by the arrow F12. In this case, the air-fuel mixture further mixes with the air of the first cavity section **51,** thereby diluting its concentration. The bottom surface of the first cavity section **51** is configured to protrude upwardly toward a center, in the radial direction, of the bottom surface of the first cavity section **51** due to existence of the mountain section **54.** Accordingly, the air-fuel mixture flowing in the arrow F12 direction is raised upward, and finally flows toward the outward side, in the radial direction, from the combustion-chamber ceiling surface **6U** as shown by the arrow F13. In this case, the air-fuel mixture further mixes with the air remaining in the combustion chamber **6** of the first cavity section **51,** thereby diluting its concentration so as to become the homogeneous and thin mixture.

Meanwhile, the air-fuel mixture flowing in the direction of the arrow F12 (upwardly) goes down into the taper area **524** of the second cavity section **52** from the upper end portion **532** of the lip **53** and flows obliquely downwardly along an inclination of the taper area **524.** Then, this air-fuel mixture reaches the second bottom portion **522** as shown by the arrow F22. Herein, the taper area **524** is a surface having the inclination along the injection-hole axes AX1, AX2. Therefore, the air-fuel mixture can smoothly flow outwardly in the radial direction. That is, the air-fuel mixture can reach an outwardly-deep position of the combustion chamber **6** because of respective existences of the taper area **524** and the second bottom portion **522** positioned at the lower level than the third upper-end portion **532** of the lip **53.**

After this, the above-described air-fuel mixture is raised upwardly from a rising curved surface positioned between the second bottom portion **522** and the rising wall area **525,** and then flows toward the inward side in the radial direction from the combustion-chamber ceiling surface **6U.** In the process of the flow shown by the arrow F22, the air-fuel mixture further mixes with the air existing in the second cavity section **52** and becomes the homogeneous and lean mixture. Herein, since the rising wall area **525** extending nearly in the vertical direction exists on the outward side, in the radial direction, of the secant bottom portion **522,** it is prevented that the injected fuel (the air-fuel mixture) reaches the inner wall surface of the cylinder **2** (in general, a cylinder liner, not illustrated, exists). That is, the above-described air-fuel mixture is possibly made to flow up to a position near the outward side, in the radial direction, of the combustion chamber 6 by the second bottom portion **522,** but it can be suppressed by the rising wall area **525** that this mixture interferes with the inner peripheral wall of the cylinder **2.** Thereby, any improper cooling loss caused by the above-described interference can be properly suppressed.

Herein, the lower part of the rising wall area **525** is configured to be positioned on the inward side, in the radial direction B, of the upper end of the rising wall area **525.** Accordingly, the flow shown by the arrow F22 does not become excessively strong, so that the air-fuel mixture can be prevented from flowing back inwardly in the radial direction B too much. If the flow shown by the arrow F22 was too strong, the air-fuel mixture burning partially might hit against the fuel newly injected before this newly-injected fuel spreads sufficiently, so that homogeneous burning (combustion) of the air-fuel mixture might be so hindered that some soot and the like might be generated improperly. However, since the rising wall area **525** of the present embodiment does not have any outwardly-hollowed shape, the flow of the arrow F22 is so repressive that a flow going outwardly in the radial direction B which is shown by the arrow F23 is generated as well. Especially, it is likely that the flow shown by the arrow F23 is generated because it is pulled by a reverse squish flow in a later stage of burning of the air-fuel mixture as well. Accordingly, the appropriate burning of the air-fuel mixture can be attained by effectively utilizing a space located on the outward side, in the radial direction, of the rising wall area **525** (i.e., a space on the squish area **55).** Thereby, generation of the soot and the like is so suppressed that the burning (combustion) utilizing a whole part of the space in the combustion chamber can be attained.

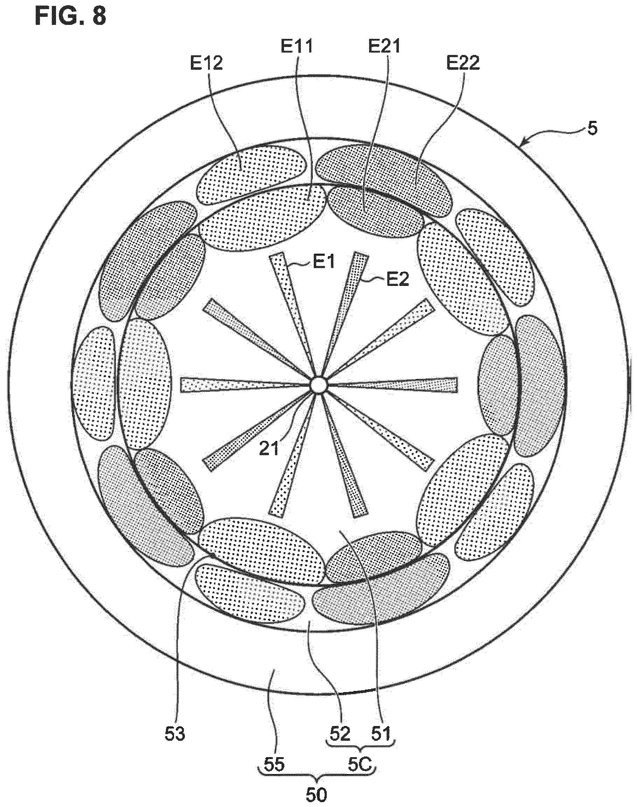

FIG. **8** is a top view of the piston **5,** which schematically shows a distribution pattern of the fuel spray to the first-and-second cavity sections **51, 52.** The first fuel spray **E1** injected toward the lip **53** along the injection-hole axis AX1 is divided into a lower-stage spray **E11** and an upper-stage spray **E12** by the above-described spatial distribution performance as shown in FIG. **8.** Likewise, the second fuel spray **E2** injected toward the lip **53** along the injection-hole axis AX2 is divided into a lower-stage spray **E21** and an upper-stage spray **E22.** Thereby, the air-fuel mixture can be generated by effectively utilizing the oxygen existing in the respective spaces of the first-and-second cavity sections **51, 52.** That is, the homogeneous and lean air-fuel mixture can be generated by widely using the space of the combustion chamber 6, so that the generation of the soot and the like during the fuel combustion can be properly suppressed.

[Temporal Distribution of Fuel Injection]

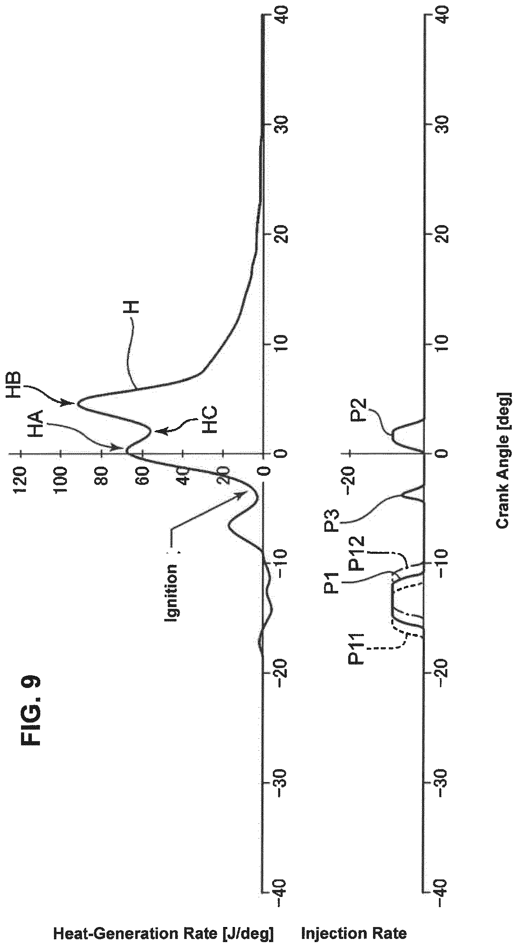

The present embodiment shows an example where the fuel spray is distributed temporally in addition to the above-described spatial distribution, thereby more effectively utilizing the air existing in the combustion chamber **6.** FIG. **9** shows an example of the timing of the fuel injection from the injector **18** to the cavity **5C** and a time chart showing a heat-generation-rate characteristic H. The fuel injection executed by the injector **18** is controlled by a fuel-injection controller **18A** (see FIG. 1). The fuel-injection controller **18A** makes the injector **18** execute one or more injections, particularly the pre-injection P1, a main-injection P2, and a middle-stage injection P3.

The pre-injection P1 is the fuel injection which is executed when the piston **5** is positioned on an advanced side of (i.e., before) the compression top dead center (TDC). The pre-injection P1 aims at premixed combustion of the injected fuel, which is executed in a later stage of a compression stroke where a cylinder-inside pressure and a cylinder-inside temperature become considerably high respectively. The main-injection P2 is executed on a retarded side of (i.e., after) the pre-injection P1 and started during a period of the premixed combustion of the fuel injected by the pre-injection P1. That is, the main-injection P2 aims at diffusion combustion of the injected fuel by utilizing the heat of the premixed combustion, which is started when the piston **5** is positioned nearly at TDC. The middle-stage injection P3 is the fuel injection which is executed between the pre-injection P1 and the main-injection P2. It is intended that the fuel injected by the middle-stage injection P3 is burned during a period between the combustion of the pre-injection P1 and the combustion of the main-injection P2. The middle-stage injection P3 is substantially the diffusion combustion as well.

FIG. 9 shows an example where the pre-injection P1 is executed during of a period from the crank angle - about CA 16 degrees to the crank angle - about CA 12 degrees. The pre-injection P1 and the main-injection P2 have the same peak value of a fuel injection rate, but it is set that the pre-injection P1 has a longer fuel injection period than the main-injection P2. Further, FIG. **9** shows an example where the middle-stage injection P3 is started at the crank angle - about CA 6 degrees. The middle-stage injection P3 injects a smaller amount of fuel than the pre-injection P1 and the main-injection P2.

The heat-generation-rate characteristic H of the respective combustions of the pre-injection P1, the main-injection P2, and the middle-stage injection P3 is shown in FIG. **9.** The heat-generation-rate characteristic H is a characteristic deeply related to an increase rate of a combustion pressure in the combustion chamber 6, which comprises a front-stage combustion part HA which corresponds to a peak generated by the premixed combustion of the pre-injection P1, a later-stage combustion part HB which corresponds to a peak generated by the diffusion combustion of the main-injection P2, and a middle-stage combustion part HC which is located between the both combustion parts HA, HB. That is, the heat-generation-rate characteristic H has two-stage peaks of the heat generation which are caused by the pre-injection P1 and the main-injection P2 which are executed separately in time and inject a relatively large amount of fuel. The middle-stage injection P3 is the fuel injection to suppress the heat-generation-rate peaks of the respective combustions of the pre-injection P1 and the main-injection P2. The middle-stage injection P3 contributes to reduction of combustion noise by this peak suppression.

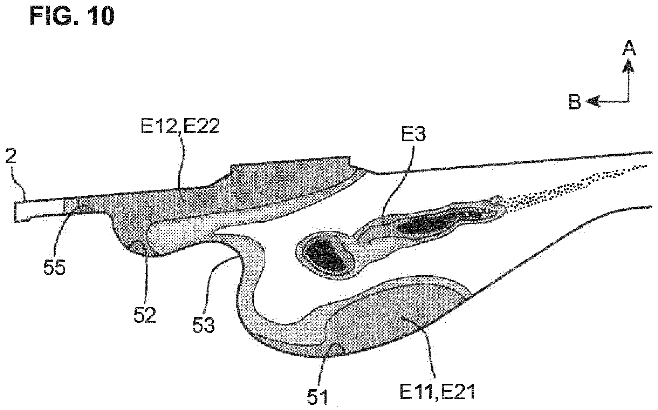

The above-described fuel spraying directed toward the lip **53** is executed in the pre-injection P1. The main-injection P2 injects the fuel to a middle position between the vertically separated air-fuel mixtures which has been formed in the lower-side first cavity section **51** and the upper-side second cavity section **52** by the fuel injection of the pre-injection P1 as described above (see the lower-stage sprays **E11, E21** and the upper-stage sprays **E12, E22** in FIG. **8).** This point will be described referring to FIG. **10.** FIG. **10** is a diagram schematically showing a generation state of the air-fuel mixtures in the combustion chamber 6 at the timing when the main-injection P2 is terminated.

The first fuel spray **E1** of the pre-injection P1 becomes the air-fuel mixture through its mixing with the air existing in the combustion chamber **6** and then hits against the lip **53.** By this hitting against the lip **53,** the first-and-second fuel sprays **E1, E2** are respectively divided into the lower-stage sprays **E11, E21** going to the first cavity section **51** and the upper-stage sprays **E12, E22** going to the second cavity section **52** as shown in FIG. **10.** These are the above-described vertically-separated distribution of the air-fuel mixtures. The main-injection P2 is the fuel injection to be executed in order to form a new air-fuel mixture by utilizing air which remains in a space positioned between the two separately-formed air-fuel mixtures which have been previously formed in the first-and-second cavity sections **51, 52 by** the pre-injection P1.

Further description will be added referring to FIG. **10.** Since the piston **5** is positioned substantially at the TDC at the execution timing of the main-injection P2, the fuel of the main-injection P2 is injected toward a position located at a slightly lower level than the lip **53.** The lower-stage sprays **E11, E21** and the upper-stage sprays **E12, E22** which have been previously injected by the pre-injection P1 flow into the first-and-second cavity sections **51, 52** and mix with the air existing in the respective spaces, respectively, so that dilution advances. There exists unused air (air having not been mixed with the fuel yet) between the lower-stage sprays **E11, E21** and the upper-stage sprays **E12, E22** at a timing right before starting of the main-injection P2. Herein, the "egg shape" of the first cavity section **51** contributes to forming of a layer of this unused air. The fuel injected by the main-injection P2 goes into a space between the lower-stage sprays **E11, E21** and the upper-stage sprays **E12, E22,** and mixes with the above-described unused air, thereby becoming a main-fuel spray **E3.** This is a temporal distribution of the fuel spray. As described above, in the present embodiment, the combustion effectively utilizing the air existing in the combustion chamber **6** can be attained by the spatial- and-temporal distributions of the fuel injection.

[Merit of Multi-Corn Angles]

The injector **18 of** the present embodiment includes the first injection-hole group **30** having the plural first injection holes **31** relatively directed to the part close to the piston **5** and the second injection-hole group **40** having the plural first injection holes **41** relatively directed to the part close to the combustion-chamber ceiling surface **6U.** That is, this injector **18** is a so-called multi-corn angle type provided with the injection holes having the different corn angles. A merit of this multi-corn angle type of injection will be described.

There is a case where the injection timing (execution timing) of the pre-injection P1 shown in FIG. **9** is needed to be advanced or retarded according to a driving condition or the like in order to secure the appropriate combustion. For example, a wall-surface temperature, the cylinder-inside pressure, and the cylinder-inside temperature of the cylinder **2** change depending on an outside temperature, an outside pressure, an engine-coolant temperature, etc. The execution timing of the pre-injection P1 needs to be adjusted in order to maintain the desired heat-generation-rate characteristic H (the peak occurrence timing of the front-stage/later-stage combustion parts HA, HB) regardless of a change of the above-described environmental factors. Specifically, as shown in a lower part in FIG. **9,** there is a case where the start timing of the pre-injection P1 is changed to a pre-injection P11 which is advanced from a normal timing or to a pre-injection P12 which is retarded from the normal timing.

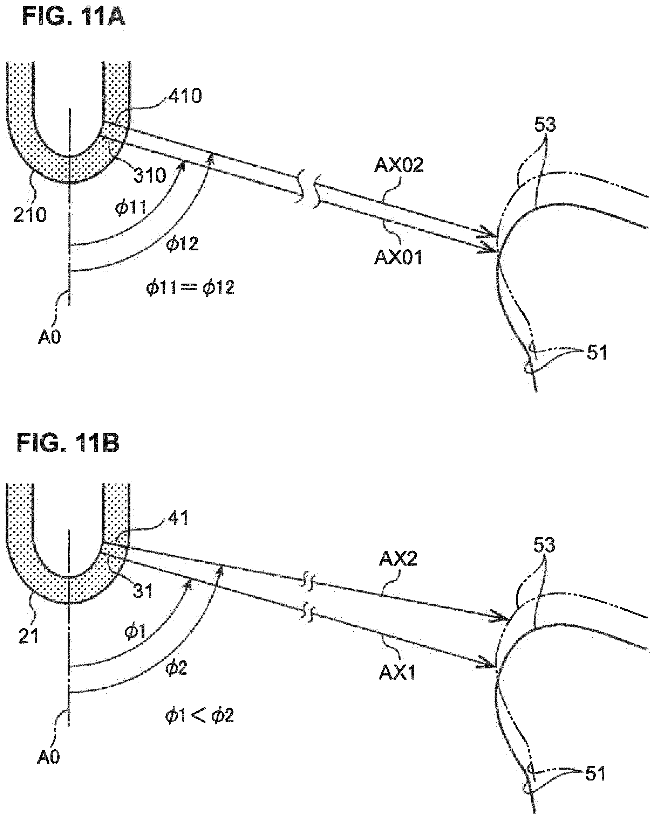

FIGS. **11A, 11B** are diagrams showing injection states of the fuel injected toward the lip **53,** FIG. **11A** showing a case of a comparative example using a nozzle head **210,** FIG. **11B** showing a case of the present embodiment using the nozzle head **21.** The nozzle head **210** of the comparative example is provided with a first injection hole **310** and a second injection hole **410** which are offset from each other in the cylinder axis A0 similarly to the present embodiment. However, an injection-hole axis AX01 of the first injection hole **310** and an injection-hole axis AX02 of the second injection hole **410** are parallel to each other. That is, a first corn angle $\varphi$11 of the injection-hole axis AX01 and a second corn angle $\varphi$12 of the injection-hole axis AX02 relative to the cylinder axis A0 are equal to each other $\varphi 11 = \varphi 12$).

In FIG. **11A,** the lip **53** shown by a solid line shows a level (height) position of the lip **53** at the execution timing of the pre-injection P1 shown in FIG. **9.** In this case, since both of the injection-hole axes AX01, AX02 are directed toward the lip **53,** the above-described spatial distribution of the fuel spray can be appropriately achieved. Meanwhile, the lip **53** shown by a dotted line shows a level (height) position of the lip **53** at the execution timing of the retarded pre-injection P12. In this case, both of the inj ection-hole axes AX01, AX02 are directed toward the vicinity of a lower end of the lip **53** or the vicinity of an upper end of the first cavity section **51.** Accordingly, the fuel spray shows its biased distribution such that there exists a large amount of fuel spray in the first cavity **51** but there exists a small amount of fuel spray in the second cavity section **52.** That is, the above-described appropriate fuel-spray spatial distribution is not able to be maintained. In this case, there may occur a problem that the oxygen is not utilized sufficiently in the second cavity section **52,** whereas the fuel is not burned perfectly in the first cavity section **51.**

On the contrary, in the case of using the nozzle head **21** of the present embodiment, the appropriate spatial distribution of the fuel spray can be maintained regardless of the retarded pre-injection P1 (or the advanced pre-injection P1). That is, the nozzle head **21** is configured such that the first corn angle $\varphi$1 of the injection-hole axis AX1 of the first injection hole **31** and the second corn angle $\varphi$2 of the injection-hole axis AX2 of the second injection hole **41** are different from each other $\varphi 11 < \varphi 12$). Accordingly, the larger (stronger) the penetration becomes, the wider the distance between the injection-hole axis AX1 and the injection-hole axis AX2 becomes. Thereby, the injection-hole angle of the injector **18** can be properly enlarged.

Accordingly, the fuel spray directed toward the lip **53** can be attained at the level position (shown by the solid line) of the lip **53** at the execution timing of the pre-injection **P1,** and also the fuel spray directed toward the lip **53** can be attained at the level position (shown by the dotted line) of the lip **53** at the execution timing of the retarded pre-injection P1. Thus, the fuel spray can be distributed properly to the firs-and-second cavity sections **51, 52,** not being biased, even in the case where the pre-injection P1 is retarded or advanced.

Herein, the injection-hole angle may be possibly enlarged by enlarging the outlet diameter of the injection hole in place of adopting the multi-corn angles of the injection hole. However, it is necessary to enlarge a volume of the sack portion **22** for the purpose of securing the sufficient penetration, enlarging the injection-hole angle, and this may not be preferable because the large-sized injector is required. Moreover, the enlarged outlet diameter of the injection hole may cause a unpreferable concern that the fuel remaining inside the sack portion **22** drips and thereby a fuel deposit is improperly generated.

[Merit of Offset Arrangement of Injection Holes]

As shown in FIG. **5B,** in the nozzle head **21** of the present embodiment, the first injection holes **31** (the injection-hole outlets **33**) and the second injection holes **41** (the injection-hole outlets **43**) are offset in the cylinder-axis direction A, and each one of the second injection holes **41 is** arranged so as to be located at the central position, in the peripheral direction, of the adjacent two holes of the first injection holes **31** (hereafter, this injection-hole arrangement will be referred to as a zigzag arrangement). This injection-hole arrangement can suppress any improper mutual interference of the fuel spray, so that the fuel spray can be distributed into the space of the combustion chamber **6** more homogeneously.

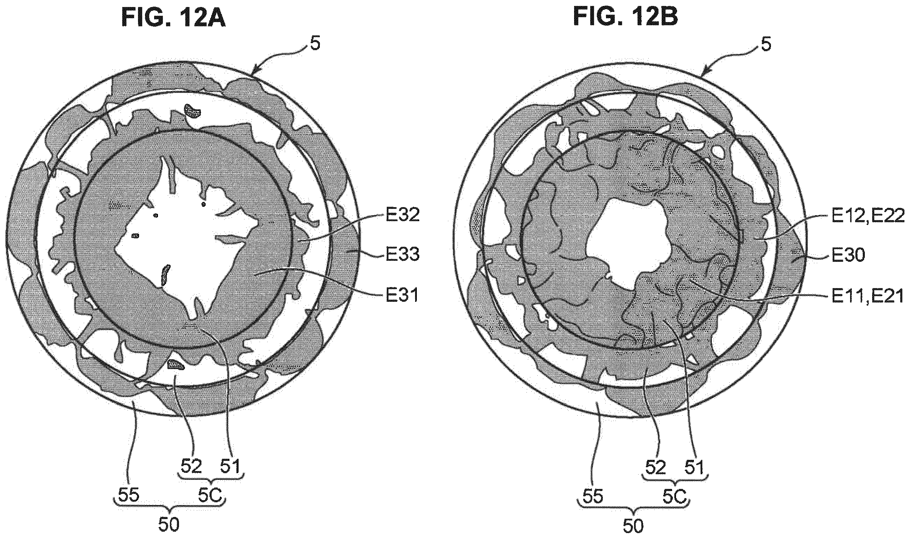

FIGS. **12A, 12B** are diagrams showing distribution states of the fuel spay, FIG. **12A** showing a case of the comparative example, FIG. **12B** showing a case of the present embodiment. FIG. **12A** shows the fuel-spray distribution state of the comparative example using a nozzle head which is configured such that ten injection holes are arranged in a line on a single ring-shaped line and these injection holes have the same injection-hole angle. It is found in the comparative example that a large amount of fuel spray **E31** flows into the first cavity section **51,** whereas a small amount of fuel spray **E32** flows into the second cavity section **52.** Further, it is found that the fuel spray **E31** does not flow into a central area in the first cavity section **51.** Accordingly, it appears that the oxygen in the combustion chamber is not effectively utilized. Moreover, it is found that a fuel spray **E33** flows deeply into the squish area **55** and contacts the inner wall surface of the cylinder **2.** This may cause improper cooling loss.

This problem is primarily caused by the arrangement that the injection holes are arranged on the single ring-shaped line as well. In the case where the injection holes are provided at the nozzle head so as to be arranged in a line in the ring shape, the distance between the adjacent injection-hole outlets in the peripheral direction is so small that the injection sprays injected from the adjacent injection-hole outlets interfere with each other. Accordingly, the flowing of the fuel sprays is so hindered that it becomes difficult for the fuel sprays **E31, E32** to flow deeply into the first-and-second cavity sections **51, 52.** Also, an rich air-fuel mixture is possibly generated at a part where the fuel sprays interfere with each other improperly.

On the contrary, it is found in the present embodiment shown in FIG. **12B** that the lower-stage injection sprays **E11, E21** are properly distributed in the first cavity section **51** and the upper-stage injection sprays **E12, E22** are properly distributed in the second cavity section **52.** Further, it is found that the lower-stage injection sprays **E11, E21** flow deeply into the first cavity section **51** up to its central area in the radial direction and the upper-stage injection sprays **E12, E22** flow deeply into the second cavity section **52** up to its outside in the radial direction. It is also found that the fuel spray **E3** does not flow deeply into the squish area **55.**

These are caused by the first injection holes **31** and the second injection holes **41** of the present embodiment, which are arranged at regular intervals and adopt the above-described zigzag arrangement and the respective injection-hole axes AX1, AX2 of which have the different corn angles φ1, φ2. Thereby, it is unlikely that the fuel sprays injected from the first-and-second injection holes **31, 41** interfere with each other, and the above-described fuel-sprays' deeply-flowing into the cavity sections is achieved.

[Examples of Various Kinds of Injection-Hole Arrangement]

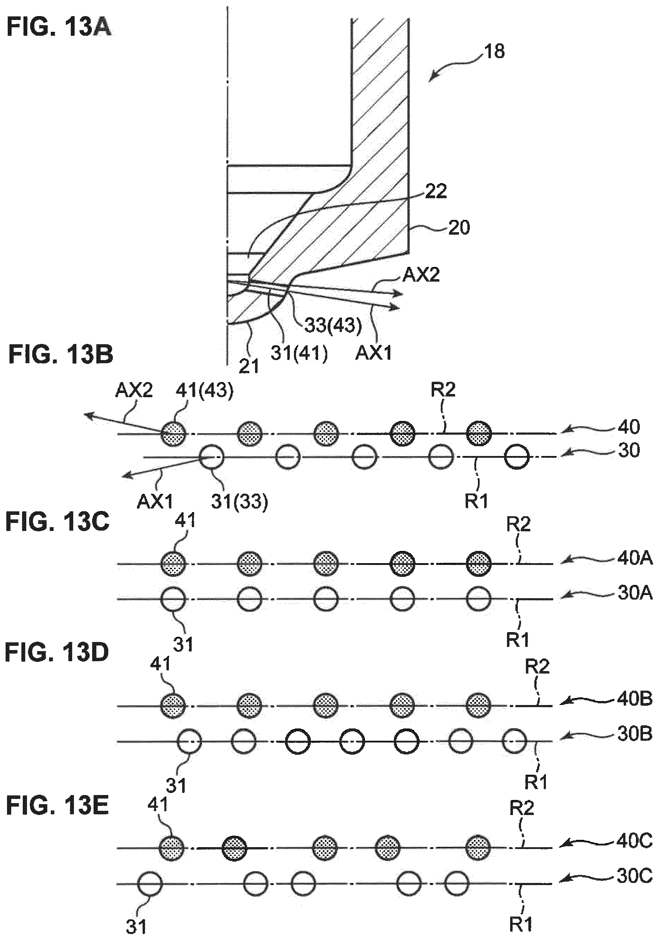

Subsequently, examples of various kinds of injection-hole arrangement of the first-and-second injection holes **31, 41** having the different hole-directions which are provided at the nozzle head **21** will be described. In a case where the first injection holes **31** (the injection-hole outlets **33)** and the second injection holes **41** (the injection-hole outlets **43**) are offset from each other as shown in FIG, **13A,** injection-hole arrangement patterns shown in FIGS. **13B - 13E** can be exemplified. FIGS. **13B - 13E** show linearly-exploded pattern diagrams of the first injection holes **31** and the second injection holes **41** which are actually arranged in the ring shape along the ring-shaped lines R1, R2.

FIG. **13B** is the pattern corresponding to the zigzag arrangement shown in FIG. **5B.** The first injection holes **31** are arranged on the ring-shaped line R1 at regular intervals and the second injection holes **41** are arranged on the ring-shaped line R2 which is offset from the ring-shaped line R1 at regular intervals, which respectively form the first injection-hole group **30** and the second injection-hole group **40.** The second injection holes **41** are located at a half-pitch offset position relative to the first injection holes **31.** As described above, since the zigzag arrangement is adopted, improper interference between the respective fuel sprays injected from the first-and-second injection holes **31, 41** can be suppressed, in addition to a cause of the difference of the injection-hole axes AX1, AX2 of the first-and-second injection holes **31, 41,** so that the fuel sprays can be distributed so as to flow into the first-and-second cavity sections **51, 52.**

The injection-hole arrangement pattern shown in FIG. 13C shows the example in which the first injection holes **31** and the second injection holes **41** are arranged at same position in the peripheral direction. That is, the first injection holes **31** of a first injection-hole group **30A** and the second injection holes **41** of a second injection-hole group **40A** are arranged in the ring shape along the respective ring-shaped lines R1, R2 without being offset from each other in the peripheral direction. According to this arrangement pattern, it is likely that interference, in the peripheral direction, of the fuel sprays injected from the respective adjacent injection holes of the first-and-second injection holes **31, 41** can be suppressed more. Further, this suppression of the interference of the radial-direction fuel sprays may make a size of an arrangement part of the injection holes small, so that the injector **18** can be properly small sized.

The injection-hole arrangement pattern shown in FIG. **13D** shows the example in which the number of the first injection holes **31** and the number of the second injection holes **41** are differentiated. A first injection-hole group **30B** is configured such that the seven first injection holes **31** are arranged along the ring-shaped line R1 at regular intervals, whereas a second injection-hole group **40B** is configured such that the five second injection holes **41** are arranged along the ring-shaped line R2 at regular intervals. It is apparent that the arrangement pitch of the first injection holes **31** is relatively narrow. This injection-hole arrangement pattern can be used in a case where the amount of fuel injection injected toward the piston **5** (the first cavity section **51)** is needed to be relatively increased, for example.

The injection-hole arrangement pattern shown in FIG. **13E** shows the example in which the first injection holes **31** and the second injection holes **41** are arranged at irregular pitches in the peripheral direction. The first injection holes **31** of a first injection-hole group **30C** and the second injection holes **41** of a second injection-hole group **40C** are arranged in the ring shape at irregular pitches along the respective ring-shaped lines R1, R2. This injection-hole arrangement pattern can suppress the interference of the fuel sprays as well.

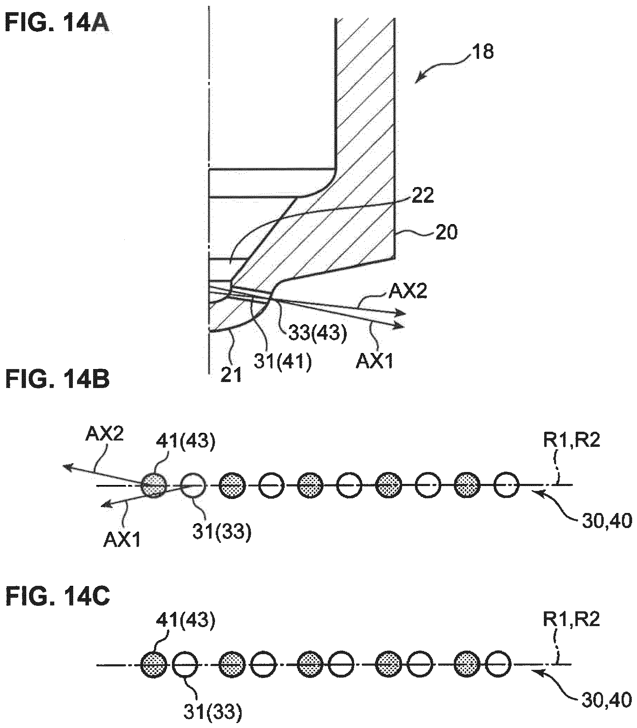

Further, it is possible that the first injection holes **31** (the injection-hole outlets **33)** and the second injection holes **41** (the injection-hole outlets **43)** are arranged so as not to be offset from each other as shown in FIG. **14A.** In this arrangement, the first injection holes **31** and the second injection holes **41** are aligned in a line in the peripheral direction at the nozzle head **21.** In this case, the injection-hole arrangement pattern shown in FIGS. **14B, 14C** can be exemplified.

In the injection-hole arrangement pattern shown in FIG. **14B,** the first-and-second injection holes **31, 41** are respectively arranged in the ring shape along the ring-shaped lines R1, R2 which are set at the same level (height position). The five first injection holes **31** are arranged at regular intervals. The five second injection holes **41** are located at the half-pitch offset position relative to the first injection holes **31.** Consequently, the ten first-and-second injection holes **31, 41** which are aligned alternately are arranged at regular intervals along the ring-shaped lines R1, R2 which are located at the same level. Even in this arrangement pattern, since the injection-hole axis AX1 of the first injection holes **31** has the different direction from the injection-hole axis AX2 of the first injection holes **41,** the appropriate distribution of the fuel spray to the first-and-second cavity sections **51, 52** can be achieved.

The injection-hole arrangement pattern shown in FIG. **14C** shows the example in which the first injection holes **31** and the second injection holes **41** are arranged in the ring shape at irregular pitches along the ring-shaped lines R1, R2 located at the same level. While the five first injection holes **31** and the five second injection holes **41** are arranged alternately along the lines R1, R2 located at the same level, its arrangement pitches are irregular. Herein, the injection-hole arrangement pattern shown in FIG. **14C** can be also recognized that a pair of the first injection hole **31** and the second injection hole **41** are arranged at regular intervals along the ring-shaped lines R1, R2.

[Operational Effect]

According to the compression ignition engine of the present embodiment described above, the first injection-hole group **30** having the plural first injection holes **31** directed toward the part close to the piston **5** and arranged in the ring shape and the second injection-hole group **40** having the plural second injection holes **41** directed toward the part close to the combustion-chamber ceiling surface **6U** and arranged in the ring shape are provided as the plural injection holes of the injector **18.** These first-and-second injection-hole groups **30, 40** inject the fuel toward the lip **53** concurrently. Thereby, an injection-hole angle of the injector **18** can be enlarged. Accordingly, even in a case where the fuel injection timing of the pre-injection P1 is advanced or retarded to a certain degree, the fuel splay is made to hit against the lip **53** so that the fuel spay can be separately flowed into the first cavity section **51** and the second cavity section **52** properly. Accordingly, the flowing of the fuel spray is prevented from deflecting to either one of the cavity sections, so that the oxygen exiting in the combustion chamber 6 can be utilized effectively and also appropriate burning of the fuel can be attained, suppressing generation of any improper soot.

## Claims

1. A compression ignition engine (1), comprising:

a combustion chamber (6) formed by a cylinder (2), a ceiling surface (6U) of a cylinder head (4) and a crown surface (50) of a piston (5);
a fuel injector (18) provided at a central portion, in a radial direction (B), of the ceiling surface (6U) of the cylinder (2) along a cylinder axis and including plural injection holes (31, 41) to inject fuel into the combustion chamber (6); and
a cavity (5C) provided at the crown surface (50) of the piston (5),
wherein the cavity (5C) includes a first cavity section (51) which is provided in a central area, in the radial direction (B), of the crown surface (50) and has a first bottom portion (512) having a first depth, in a direction (A) of the cylinder axis, from the crown surface (50), a second cavity section (52) which is provided outside the first cavity section (51) and has a second bottom portion (522) having a second depth, in the direction (A) of the cylinder axis, from the crown surface (50), the second depth being shallower than the first depth, and a lip (53) which is provided to connect the first cavity section (51) and the second cavity section (52),
the plural injection holes (31, 41) of the fuel injector (18) include a first injection-hole group (30) in which plural first injection holes (31) are provided circumferentially and a second injection-hole group (40) in which plural second injection holes (41) are provided circumferentially,
the first injection-hole group (30) and the second injection-hole group (40) are configured to inject the fuel toward the lip (53) concurrently, and
the plural second injection holes (41) are directed toward a part closer to the ceiling surface (6U) in the cylinder-axis direction (A) than a part to which the plural first injection holes (31) are directed,
**characterized in that**
the lip (53) has a convex-shaped curved surface with a specified radius (r4) which extends from a lower-end portion (531) to an upper-end portion (532),
in the second cavity section (52), a part extending from the second bottom portion (522) to an upper-end part (C4) of a rising wall area (525) is formed by a nearly 1/4 circle having a first radius (r5), and the upper-end part (C4) of the rising wall area (525) is continuous to a lower-end position of an upper-end portion (523) which is formed by a nearly 1/4 circle having a second radius (r6),
in the radial direction (B), a distance (Sh) between a central point of the first radius (r5) and a central point of the second radius (r6) is equal to or greater than a sum of the first radius (r5) and the second radius (r6), and
an upper end of the second upper-end portion (523) of the second cavity section (52) is continuous to the squish area (55) of the piston (5).

2. The compression ignition engine (1) of claim 1, wherein respective outlets (33) of the plural first injection holes (31) are provided circumferentially at the same level in the cylinder-axis direction (A), and respective outlets (43) of the plural second injection holes (41) are provided circumferentially at the same level in the cylinder-axis direction (A).

3. The compression ignition engine (1) of claim 1 or 2, wherein the level at which the respective outlets (43) of the plural second injection holes (41) are provided is offset, in the cylinder-axis direction (A), from the level at which the respective outlets (33) of the plural first injection holes (31) are provided.

4. The compression ignition engine (1) of any one of the preceding claims, wherein the level at which the respective outlets (43) of the plural second injection holes (41) are provided is offset toward the ceiling surface (6U), in the cylinder-axis direction (A), from the level at which the respective outlets (33) of the plural first injection holes (31) are provided.

5. The compression ignition engine (1) of any one of the preceding claims, wherein

the respective outlets (33) of the plural first injection holes (31) are provided circumferentially at regular intervals,
the respective outlets (43) of the plural second injection holes (41) are provided circumferentially at regular intervals, and
the outlets (33, 43) of the plural injection holes (31, 41) of the first-and-second injection-hole groups (30, 40) are arranged such that each outlet (33, 43) of the plural injection holes (31, 41) of one of the first-and-second injection-hole groups (30, 40) is located between adjacent outlets (33, 43) of the plural injection holes (31, 41) of the other group.

6. The compression ignition engine (1) of any one of the preceding claims, wherein
the outlets (33, 43) of the plural injection holes (31, 41) of the first-and-second injection-hole groups (30, 40) are arranged such that each outlet (33, 43) of the plural injection holes (31, 41) of one of the first-and-second injection-hole groups (30, 40) is located at a middle position between adjacent outlets (33, 43) of the plural injection holes (31, 41) of the other group.

**7.** The compression ignition engine (1) of any one of the preceding claims, wherein

the fuel injector (18) comprises a sack portion (22) in which the fuel is to be filled and a sack wall (23) which partitions the sack portion (22), the sack portion (22) and the sack wall (23) are provided at a tip portion (20) of the fuel injector (18) located in the combustion chamber (6), and the first injection holes (31) of the first injection group (30) and the second injection holes (41) of the second injection group (40) are respectively formed at the sack wall (23) and have the same injection-hole diameter.

**8.** The compression ignition engine (1) of any one of the preceding claims, wherein
the second injection holes (41) of the second injection group (40) are provided outside of the first injection holes (31) of the first injection group (30), in the radial direction (B).

**9.** The compression ignition engine (1) of any one of the preceding claims, wherein
the lip (53) is configured to protrude inwardly in the radial direction (B).

**10.** The compression ignition engine (1) of any one of the preceding claims, wherein
the first cavity section (51) has a concaved portion (514) curved outwardly in the radial direction (B).

**11.** The compression ignition engine (1) of any one of the preceding claims, wherein
the second cavity section (52) is located closer to the ceiling surface (6U) than the first cavity section (51) in the cylinder-axis direction (A).

**12.** The compression ignition engine (1) of any one of the preceding claims, wherein the second cavity section (52) is provided outside the first cavity section (51) in the radial direction (B).

**13.** The compression ignition engine (1) of any one of the preceding claims, further comprising a fuel-injection controller (18A) configured to change a fuel injection timing of the fuel injector (18).

**14.** The compression ignition engine (1) of any one of the preceding claims, wherein the compression ignition engine (1) is a diesel engine.

**15.** A vehicle comprising the combustion ignition engine (1) of any one of the preceding claims.

**Patentansprüche**

**1.** Kompressionszündungsmotor (1), aufweisend:

eine Brennkammer (6), die durch einen Zylinder (2), eine Deckenfläche (6U) eines Zylinderkopfes (4) und eine Kronenfläche (50) eines Kolbens (5) gebildet wird;
eine Kraftstoffeinspritzdüse (18), die an einem zentralen Abschnitt in einer radialen Richtung (B) der Deckenfläche (6U) des Zylinders (2) entlang einer Zylinderachse vorgesehen ist und mehrere Einspritzlöcher (31, 41) zum Einspritzen von Kraftstoff in die Brennkammer (6) aufweist; und
einen Hohlraum (5C), der an der Kronenfläche (50) des Kolbens (5) vorgesehen ist,
wobei der Hohlraum (5C) einen ersten Hohlraumabschnitt (51), der in einem zentralen Bereich in radialer Richtung (B) der Kronenfläche (50) vorgesehen ist und einen ersten Bodenabschnitt (512) aufweist, der eine erste Tiefe in einer Richtung (A) der Zylinderachse von der Kronenfläche (50) aufweist, einen zweiten Hohlraumabschnitt (52), der außerhalb des ersten Hohlraumabschnitts (51) vorgesehen ist und einen zweiten Bodenabschnitt (522) aufweist, der eine zweite Tiefe in der Richtung (A) der Zylinderachse von der Kronenfläche (50) besitzt, wobei die zweite Tiefe flacher ist als die erste Tiefe, sowie eine Lippe (53) aufweist, die vorgesehen ist, um den ersten Hohlraumabschnitt (51) und den zweiten Hohlraumabschnitt (52) zu verbinden,
die mehreren Einspritzlöcher (31, 41) der Kraftstoffeinspritzdüse (18) eine erste Einspritzlochgruppe (30), in der mehrere erste Einspritzlöcher (31) in Umfangsrichtung vorgesehen sind, und eine zweite Einspritzlochgruppe (40) aufweisen, in der mehrere zweite Einspritzlöcher (41) in Umfangsrichtung vorgesehen sind,
die erste Einspritzlochgruppe (30) und die zweite Einspritzlochgruppe (40) derart konfiguriert sind, dass sie den Kraftstoff gleichzeitig in Richtung der Lippe (53) einspritzen, und
die mehreren zweiten Einspritzlöcher (41) auf ein Teil gerichtet sind, das in Richtung der Zylinderachse (A) näher an der Deckenfläche (6U) liegt als ein Teil, auf das die mehreren ersten Einspritzlöcher (31) gerichtet sind,
**dadurch gekennzeichnet, dass**
die Lippe (53) eine konvex gekrümmte Oberfläche mit einem bestimmten Radius (r4) aufweist, die sich von einem unteren Endabschnitt (531) zu einem oberen Endabschnitt (532) erstreckt, in dem zweiten Hohlraumabschnitt (52) ein Teil, das sich von dem zweiten Bodenabschnitt (522) zu einem oberen Endteil (C4) eines ansteigenden Wandbereichs (525) erstreckt, durch einen nahezu 1/4-Kreis mit einem ersten Radius (r5) gebildet ist, und der obere Endteil (C4) des ansteigenden Wandbereichs (525) zu einer unteren Endposition eines oberen Endabschnitts (523) übergeht, der durch einen nahezu 1/4-Kreis mit einem zweiten Radius (r6) gebildet ist, in radialer Richtung (B) ein Abstand (Sh) zwischen einem Mittelpunkt des ersten Radius (r5) und einem Mittelpunkt des zweiten Radius (r6) gleich oder größer ist als die Summe aus dem ersten Radius (r5) und dem zweiten Radius (r6), und
ein oberes Ende des zweiten oberen Endabschnitts (523) des zweiten Hohlraumabschnitts (52) in die Quetschzone (55) des Kolbens (5) übergeht.

**2.** Kompressionszündungsmotor (1) nach Anspruch 1, wobei jeweilige Auslässe (33) der mehreren ersten Einspritzlöcher (31) in Umfangsrichtung auf der gleichen Ebene in Richtung der Zylinderachse (A) vorgesehen sind, und die jeweiligen Auslässe (43) der mehreren zweiten Einspritzlöcher (41) in Umfangsrichtung auf der gleichen Ebene in Richtung der Zylinderachse (A) vorgesehen sind.

**3.** Kompressionszündungsmotor (1) nach Anspruch 1 oder 2, wobei die Ebene, auf der die jeweiligen Auslässe (43) der mehreren zweiten Einspritzlöcher (41) vorgesehen sind, in Richtung der Zylinderachse (A) gegenüber der Ebene, auf der die jeweiligen Auslässe (33) der mehreren ersten Einspritzlöcher (31) vorgesehen sind, versetzt ist.

**4.** Kompressionszündungsmotor (1) nach einem der vorstehenden Ansprüche, wobei die Ebene, in der die jeweiligen Auslässe (43) der mehreren zweiten Einspritzlöcher (41) vorgesehen sind, in Richtung der Deckenfläche (6U) in Richtung der Zylinderachse (A) gegenüber der Ebene, in der die jeweiligen Auslässe (33) der mehreren ersten Einspritzlöcher (31) vorgesehen sind, versetzt ist.

**5.** Kompressionszündungsmotor (1) nach einem der vorstehenden Ansprüche, wobei

die jeweiligen Auslässe (33) der mehreren ersten Einspritzlöcher (31) in regelmäßigen Abständen in Umfangsrichtung vorgesehen sind,
die jeweiligen Auslässe (43) der mehreren zweiten Einspritzlöcher (41) in regelmäßigen Abständen in Umfangsrichtung vorgesehen sind, und
die Auslässe (33, 43) der mehreren Einspritzlöcher (31, 41) der ersten und zweiten Einspritzlochgruppen (30, 40) derart angeordnet sind, dass jeder Auslass (33, 43) der mehreren Einspritzlöcher (31, 41) einer der ersten und zweiten Einspritzlochgruppen (30, 40) zwischen benachbarten Auslässen (33, 43) der mehreren Einspritzlöcher (31, 41) der anderen Gruppe angeordnet ist.

**6.** Kompressionszündungsmotor (1) nach einem der vorstehenden Ansprüche, wobei
die Auslässe (33, 43) der mehreren Einspritzlöcher (31, 41) der ersten und zweiten Einspritzlochgruppe (30, 40) derart angeordnet sind, dass jeder Auslass (33, 43) der mehreren Einspritzlöcher (31, 41) einer der ersten und zweiten Einspritzlochgruppe (30, 40) in einer mittleren Position zwischen benachbarten Auslässen (33, 43) der mehreren Einspritzlöcher (31, 41) der anderen Gruppe angeordnet ist.

**7.** Kompressionszündungsmotor (1) nach einem der vorstehenden Ansprüche, wobei

die Kraftstoffeinspritzdüse (18) einen Sackabschnitt (22) aufweist, in den der Kraftstoff einzufüllen ist, und eine Sackwand (23) aufweist, die den Sackabschnitt (22) unterteilt,
der Sackabschnitt (22) und die Sackwand (23) an einem Spitzenabschnitt (20) der Kraftstoffeinspritzdüse (18) vorgesehen sind, die in der Brennkammer (6) angeordnet ist, und
die ersten Einspritzlöcher (31) der ersten Einspritzgruppe (30) und die zweiten Einspritzlöcher (41) der zweiten Einspritzgruppe (40) jeweils an der Sackwand (23) ausgebildet sind und denselben Einspritzlochdurchmesser aufweisen.

**8.** Kompressionszündungsmotor (1) nach einem der vorstehenden Ansprüche, wobei
die zweiten Einspritzlöcher (41) der zweiten Einspritzgruppe (40) in radialer Richtung (B) außerhalb der ersten Einspritzlöcher (31) der ersten Einspritzgruppe (30) vorgesehen sind.

**9.** Kompressionszündungsmotor (1) nach einem der vorstehenden Ansprüche, wobei
die Lippe (53) derart konfiguriert ist, dass sie in radialer Richtung (B) nach innen hervorsteht.

**10.** Kompressionszündungsmotor (1) nach einem der vorstehenden Ansprüche, wobei
der erste Hohlraumabschnitt (51) einen konkaven Abschnitt (514) aufweist, der in radialer Richtung (B) nach außen gewölbt ist.

**11.** Kompressionszündungsmotor (1) nach einem der vorstehenden Ansprüche, wobei
der zweite Hohlraumabschnitt (52) in Richtung der Zylinderachse (A) näher an der Deckenfläche (6U) angeordnet ist als der erste Hohlraumabschnitt (51).

**12.** Kompressionszündungsmotor (1) nach einem der vorstehenden Ansprüche, wobei der zweite Hohlraumabschnitt (52) in radialer Richtung (B) außerhalb des ersten Hohlraumabschnitts (51) vorgesehen ist.

**13.** Kompressionszündungsmotor (1) nach einem der vorstehenden Ansprüche, ferner aufweisend eine Kraftstoffeinspritzsteuerung (18A), die derart konfiguriert ist, dass sie einen Kraftstoffeinspritzzeitpunkt der Kraftstoffeinspritzdüse (18) ändert.

**14.** Kompressionszündungsmotor (1) nach einem der vorstehenden Ansprüche, wobei der Kompressionszündungsmotor (1) ein Dieselmotor ist.

**15.** Fahrzeug, aufweisend einen Verbrennungsmotor (1) nach einem der vorstehenden Ansprüche.

## Revendications

**1.** Moteur à allumage par compression (1), comprenant :

une chambre de combustion (6) formée par un cylindre (2), une surface de plafond (6U) d'une culasse (4) et une surface de couronne (50) d'un piston (5) ;
un injecteur de carburant (18) prévu sur une partie centrale, dans une direction radiale (B), de la surface de plafond (6U) du cylindre (2) le long d'un axe de cylindre et comportant une pluralité de trous d'injection (31, 41) pour injecter du carburant dans la chambre de combustion (6) ; et
une cavité (5C) prévue sur la surface de couronne (50) du piston (5),
dans lequel la cavité (5C) comporte une première section de cavité (51), qui est prévue dans une zone centrale, dans la direction radiale (B), de la surface de couronne (50) et présente une première partie inférieure (512) présentant une première profondeur, dans une direction (A) de l'axe de cylindre, depuis la surface de couronne (50), une deuxième section de cavité (52), qui est prévue à l'extérieur de la première section de cavité (51) et présente une deuxième partie inférieure (522) présentant une deuxième profondeur, dans la direction (A) de l'axe de cylindre, depuis la surface de couronne (50), la deuxième profondeur étant moins profonde que la première profondeur, et une lèvre (53), qui est prévue pour relier la première section de cavité (51) et la deuxième section de cavité (52),
la pluralité de trous d'injection (31, 41) de l'injecteur de carburant (18) comportent un premier groupe de trous d'injection (30), dans lequel une pluralité de premiers trous d'injection (31) sont fournis de manière circonférentielle et un deuxième groupe de trous d'injection (40), dans lequel une pluralité de deuxièmes trous d'injection (41) sont fournis de manière circonférentielle,
le premier groupe de trous d'injection (30) et le deuxième groupe de trous d'injection (40) sont configurés pour injecter le carburant vers la lèvre (53) concomitamment, et
la pluralité de deuxièmes trous d'injection (41) sont dirigés vers une partie plus proche de la surface de plafond (6U) dans la direction d'axe de cylindre (A) qu'une partie vers laquelle la pluralité de premiers trous d'injection (31) sont dirigés,
**caractérisé en ce que**
la lèvre (53) présente une surface incurvée de forme convexe avec un rayon (r4) spécifié, qui s'étend depuis une partie d'extrémité inférieure (531) à une partie d'extrémité supérieure (532), dans la deuxième section de cavité (52), une partie s'étendant depuis la deuxième partie inférieure (522) à une partie d'extrémité supérieure (C4) d'une zone de paroi verticale (525) est formée par un quasi quart de cercle présentant un premier rayon (r5), et la partie d'extrémité supérieure (C4) de la zone de paroi verticale (525) est continue jusqu'à une position d'extrémité inférieure d'une partie d'extrémité supérieure (523) qui est formée par un quasi quart de cercle présentant un deuxième rayon (r6),
dans la direction radiale (B), une distance (Sh) entre un point central du premier rayon (r5) et un point central du deuxième rayon (r6) est supérieure ou égale à une somme du premier rayon (r5) et du deuxième rayon (r6), et
une extrémité supérieure de la deuxième partie d'extrémité supérieure (523) de la deuxième section de cavité (52) est continue jusqu'à la zone de jaillissement (55) du piston (5).

**2.** Moteur à allumage par compression (1) selon la revendication 1, dans lequel des sorties (33) respectives de la pluralité de premiers trous d'injection (31) sont prévues de manière circonférentielle sur le même niveau dans la direction d'axe de cylindre (A), et des sorties (43) respectives de la pluralité de deuxièmes trous d'injection (41) sont prévues de manière circonférentielle sur le même niveau dans la direction d'axe de cylindre (A).

**3.** Moteur à allumage par compression (1) selon la revendication 1 ou 2, dans lequel le niveau, auquel les sorties (43) respectives de la pluralité de deuxièmes trous d'injection (41) sont prévues, est décalé, dans la direction d'axe de cylindre (A), depuis le niveau où les sorties (33) respectives de la pluralité de premiers trous d'injection (31) sont prévues.

**4.** Moteur à allumage par compression (1) selon l'une quelconque des revendications précédentes, dans lequel le niveau sur lequel les sorties (43) respectives de la pluralité de deuxièmes trous d'injection (41) sont prévues est décalé vers la surface de plafond (6U), dans la direction d'axe de cylindre (A), depuis le niveau où les sorties (33) respectives de la pluralité de premiers trous d'injection (31) sont prévues.

**5.** Moteur à allumage par compression (1) selon l'une quelconque des revendications précédentes, dans lequel

les sorties (33) respectives de la pluralité de premiers trous d'injection (31) sont fournies de manière circonférentielle à des intervalles réguliers,
les sorties (43) respectives de la pluralité de deuxièmes trous d'injection (41) sont fournies de manière circonférentielle à des intervalles réguliers, et
les sorties (33, 43) de la pluralité de trous d'injection (31, 41) des premiers et deuxièmes groupes de trous d'injection (30, 40) sont disposées de telle sorte que chaque sortie (33, 43) de la pluralité de trous d'injection (31, 41) d'un des premier et deuxième groupes de trous d'injection (30, 40) est située entre des sorties (33, 43) adjacentes de la pluralité de trous d'injection (31, 41) de l'autre groupe.

**6.** Moteur à allumage par compression (1) selon l'une quelconque des revendications précédentes, dans lequel
les sorties (33, 43) de la pluralité de trous d'injection (31, 41) des premier et deuxième groupes de trous d'injection (30, 40) sont disposées de telle sorte que chaque sortie (33, 43) de la pluralité de trous d'injection (31, 41) d'un des premier et deuxième groupes de trous d'injection (30, 40) est située sur une position centrale entre des sorties (33, 43) adjacentes de la pluralité de trou d'injection (31, 41) de l'autre groupe.

**7.** Moteur à allumage par compression (1) selon l'une quelconque des revendications précédentes, dans lequel

l'injecteur de carburant (18) comprend une partie formant sac (22), dans laquelle le carburant est à transvaser et une paroi de sac (23) qui cloisonne la partie formant sac (22),
la partie formant sac (22) et la paroi de sac (23) sont prévues sur une partie de pointe (20) de l'injecteur de carburant (18) située dans la chambre de combustion (6), et
les premiers trous d'injection (31) du premier groupe d'injection (30) et les deuxièmes trous d'injection (41) du deuxième groupe d'injection (40) sont formés respectivement sur la paroi de sac (23) et présentent le même diamètre de trou d'injection.

**8.** Moteur à allumage par compression (1) selon l'une quelconque des revendications précédentes, dans lequel
les deuxièmes trous d'injection (41) du deuxième groupe d'injection (40) sont prévus à l'extérieur des premiers trous d'injection (31) du premier groupe d'injection (30) dans la direction radiale (B).

**9.** Moteur à allumage par compression (1) selon l'une quelconque des revendications précédentes, dans lequel la lèvre (53) est configurée pour faire saillie vers l'intérieur dans la direction radiale (B).

**10.** Moteur à allumage par compression (1) selon l'une quelconque des revendications précédentes, dans lequel la première section de cavité (51) présente une partie concave (514) incurvée vers l'extérieur dans la direction radiale (B).

**11.** Moteur à allumage par compression (1) selon l'une quelconque des revendications précédentes, dans lequel
la deuxième section de cavité (52) est située davantage à proximité de la surface de plafond (6U) que la première section de cavité (51) dans la direction d'axe de cylindre (A).

**12.** Moteur à allumage par compression (1) selon l'une quelconque des revendications précédentes, dans lequel la deuxième section de cavité (52) est prévue à l'extérieur de la première section de cavité (51) dans la direction radiale (B).

**13.** Moteur à allumage par compression (1) selon l'une quelconque des revendications précédentes, comprenant en outre un dispositif de commande d'injection de carburant (18A) configuré pour modifier un temps d'injection de carburant de l'injecteur de carburant (18).

**14.** Moteur à allumage par compression (1) selon l'une quelconque des revendications précédentes, dans lequel le moteur à allumage par compression (1) est un moteur Diesel.

**15.** Véhicule comprenant le moteur à allumage par compression (1) selon l'une quelconque des revendications précédentes.

+Z
+X
-X
-Z
FIG. 1
Fuel-Injection Controller
18A
1
19
13
14
15
16
4
12
11
18
10
9
4B
4A
6
5C
2
50
6U
81
5
8
3
7
A
B

FIG. 2A

A
B
5C
51
52
53
5
50
55
54
56

FIG. 2B

A
B
5C
51
52
53
50
55
5
521(532)
523
54
533
522
56
52
53
51
5C
513
512
511
(531)

2
56
55
525
523
L2
5
50
L1
522
52
α
524
521
533
514
532
531
511
53
6U
5C
51
512
6

FIG. 3

FIG. 4
5C
6
18
AX
54
A
B
53
521
511
C2
C1
r1
r2
r3
51
512
C3
52
r4
r5
r6
Sv
Sh
522
525
C4
523
55
r2=r3
r4+r5>Sv
r5+r6≦Sh

FIG. 5A
A
B
18
20
22
31
41
33
43
21
32
42
23
FIG. 5B
40
41
41(43)
30
31
31(33)
20(18)
R1
R2
21

FIG. 6A
AX1
AX2
E2
E1
E2
E1
21
FIG. 6B
A0
18(20)
E2
E2
AX2
21
AX2
ϕ2
AX1
AX1
ϕ1
E1
E1

FIG. 7
2
55
56
525
522
524
F23
52
F22
532
533
531
514
6U
F21
6
53
F11
5C
AX2
AX1
AX11
AX12
F12
512
51
E1
F13
513
31(41)
θ
18
20
54
A
B

FIG. 8

E12
E11
E21
E22
5
E1
E2
21
53
55
52
51
5C
50

FIG. 9
HB
HA
HC
H
Ignition
P1
P2
P3
P11
P12
120
100
80
60
40
20
0
−40
−30
−20
−10
0
10
20
30
40
Heat-Generation Rate [J/deg]
Injection Rate
Crank Angle [deg]

**FIG. 10**

A
B
E12,E22
E3
2
55
52
53
51
E11,E21

FIG. 11A

410
53
310
AX02
210
φ11
φ12
AX01
φ11＝φ12
A0
51

FIG. 11B

41
53
AX2
31
21
φ1
φ2
AX1
φ1＜φ2
A0
51

5
E12,E22
E30
E11,E21
51
52
5C
55
50
5
E32
E33
E31
51
52
5C
55
50

FIG. 12B

FIG. 12A

FIG. 13A
18
22
20
AX2
33(43)
21
31(41)
AX1
FIG. 13B
AX2
41(43)
R2
40
30
AX1
31(33)
R1
FIG. 13C
41
R2
40A
30A
31
R1
FIG. 13D
41
R2
40B
30B
31
R1
FIG. 13E
41
R2
40C
30C
31
R1

FIG. 14A

18
22
20
AX2
33(43)
AX1
31(41)
21

FIG. 14B

AX2
41(43)
R1,R2
30,40
AX1
31(33)

FIG. 14C

41(43)
R1,R2
30,40
31(33)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007211644 A
- US 20090025675 A1
- JP 5962795 B
- US 20160237972 A1
- FR 2902462 A1
- FR 2868480 A1